# EUROPEAN PATENT APPLICATION

(11) **EP 3 235 931 A1**
(43) Date of publication of application: **25.10.2017**
(21) Application number: 15867948.0
(22) Date of filing: 07.12.2015
(51) Int. Cl.: D01F 8/04, G02F 1/1334

(54) **COMPOSITE FIBER WITH ENCLOSED LIQUID CRYSTAL, AND COMPOSITE FIBER ARRANGEMENT**

(30) Priority: 08.12.2014 JP 2014248413
(71) Applicant: JNC Corporation, Chiyoda-ku Tokyo 100-8105 (JP)
(72) Inventor: UMEBAYASHI You, Moriyama-shi Shiga 524-0001 (JP); MIYAUCHI Minoru, Osaka-shi Osaka 530-6108 (JP)
(74) Representative: Thurston, Joanna
(86) International application number: PCT/JP2015/084315
(87) International publication number: WO 2016/093198

(57) **Abstract**

An object of the invention is to provide conjugate fibers with an encapsulated liquid crystal, which can be used for forming a flexible liquid crystal display device, and the conjugate fibers without disturbance of arrangement of liquid crystal molecules within the fibers. The conjugate fibers according to the invention are sheath-core conjugate fibers having a liquid crystal composition as a core component, and the conjugate fibers with the encapsulated liquid crystal, in which the liquid crystal composition contains a halogen-containing liquid crystal compound.

## Description

### Technical Field

The invention relates to sheath-core conjugate fibers with an encapsulated liquid crystal composition, and a conjugate fiber aggregate in which the conjugate fibers are uniaxially arranged.

### Background Art

A liquid crystal display device has advantages such as thinness, lightweight, low power consumption and low power driving, and therefore has been widely used as a display medium for a wrist watch, an electronic calculator, a cellular phone, a personal computer, a television or the like.

A general liquid crystal display device requires a means for controlling alignment of liquid crystal molecules, in which a means for forming an alignment film is generally used. Such a method is applied as a method in which alignment of liquid crystal molecules is controlled in a direction parallel to a substrate by an alignment film subjected to rubbing treatment, and a method in which alignment of liquid crystal molecules is controlled in a direction perpendicular to a substrate by introducing a hydrophobic structure such as an alkyl group and a fluorine-containing group into an alignment film. However, such a method has a problem of an increased manufacturing cost needed in a step of forming the alignment film.

Moreover, attention has been recently focused on a flexible liquid crystal display device in which a plastic film or the like is used as the substrate. Such a flexible liquid crystal display device is thinner and lighter in weight in comparison with a conventional liquid crystal device in which a glass substrate is used, and can be used as a display device that can be stored in a rolled form and is convenient to carry. However, such a device requires a high temperature process upon forming the alignment film, and therefore has a problem of restricted use of a flexible substrate having low heat resistance itself.

Accordingly, a desire has been expressed for a method of controlling alignment of the liquid crystal molecules without forming the alignment film.

As the method of controlling alignment of the liquid crystal molecules without forming the alignment film, a method is known in which a liquid crystal material or composition is sealed in fibers. For example, such fibers are known as conjugate fibers with an encapsulated liquid crystal as obtained by performing electrospinning from a solution prepared by mixing a polymer, a liquid crystal material and a solvent (for example, see Patent literature No. 1), and conjugate fibers with an encapsulated liquid crystal as obtained by performing electrospinning by separately feeding a polymer solution and a liquid crystal material from a double tube nozzle (for example, see Non-patent literature No. 1).

### Citation List

### Patent Literature

Patent literature No. 1: US 8257639 B

### Non-patent literature

Non-patent literature No. 1: Eva Enz and Jan Lagerwall, "Electrospun microfibres with temperature sensitive iridescence from encapsulated cholesteric liquid crystal," Journal of Materials Chemistry, 2010, p.6866-6872

### Summary of Invention

### Technical Problem

However, the conjugate fibers with the encapsulated liquid crystal described above cause disturbance of arrangement of liquid crystal molecules within the fibers in several cases, and for example, has had a place in which no liquid crystal molecules exist, or a place in which the liquid crystal molecules exists in lump. Such conjugate fibers in which arrangement of the liquid crystal molecules is disturbed are insufficient in use as a material for a liquid crystal display device.

An object of the invention is to solve the problem as described above to provide conjugate fibers with an encapsulated liquid crystal that can be used for forming a flexible liquid crystal display device, in which disturbance of arrangement of the liquid crystal molecules is significantly small.

### Solution to Problem

The present inventors have diligently continued to conduct study in order to solve the problem described above, and as a result, have found that disturbance of arrangement of liquid crystal molecules within fibers can be significantly reduced by forming conjugate fibers having, as a core component, a liquid crystal composition containing a halogen-containing liquid crystal compound, and thus have completed the invention. [0010]

The invention has structure described below.
Item 1. Conjugate fibers with an encapsulated liquid crystal, comprising sheath-core conjugate fibers having a liquid crystal composition as a core component, wherein the liquid crystal composition contains a halogen-containing liquid crystal compound.
Item 2. The conjugate fibers with the encapsulated liquid crystal according to item 1, wherein a mean outer diameter of the conjugate fibers is 5 micrometers or less.
Item 3. The conjugate fibers with the encapsulated liquid crystal according to item 1 or 2, wherein, in the core component, the liquid crystal composition containing the halogen-containing liquid crystal compound is continuously distributed.
Item 4. The conjugate fibers with the encapsulated liquid crystal according to any one of items 1 to 3, wherein the liquid crystal composition containing the halogen-containing liquid crystal compound is aligned in a direction parallel to or perpendicular to a fiber axis.
Item 5. The conjugate fibers with the encapsulated liquid crystal according to any one of items 1 to 4, wherein a coefficient of variation (CV value) of an outer diameter of the conjugate fibers is 20% or less.
Item 6. A conjugate fiber aggregate, formed by uniaxially arranging the conjugate fibers with the encapsulated liquid crystal according to any one of items 1 to 5.

### Advantageous Effects of Invention

According to conjugate fibers of the invention, an alignment film is unnecessary in forming a liquid crystal display device, and therefore the liquid crystal display device excellent in productivity can be obtained without passing through a complicated process. Further, no high temperature treatment in an alignment film formation process is required, and therefore a flexible liquid crystal display device in which a plastic substrate or the like is used can be obtained.

### Brief Description of Drawings

Figure 1 shows a perspective view of a conjugate fiber with an encapsulated liquid crystal.
Figure 2 shows a schematic view of a conjugate fiber manufacturing apparatus in which a double tube nozzle is used.
Figure 3 shows a perspective view of a liquid crystal device in which a conjugate fiber aggregate according to the invention is used.
Figure 4 shows a polarizing microscope photograph of conjugate fibers obtained in Example 1.
Figure 5 shows a scanning electron microscope photograph of conjugate fibers obtained in Example 1.
Figure 6 shows a scanning electron microscope photograph of conjugate fibers obtained in Example 2.

### Description of Embodiments

Hereinafter, the invention will be described in detail according to embodiments thereof.

Conjugate fibers with an encapsulated liquid crystal (hereinafter, also referred to simply as "conjugate fibers") according to the invention are sheath-core conjugate fibers having a liquid crystal composition as a core component, in which the liquid crystal composition contains a halogen-containing liquid crystal compound.

### Liquid crystal compound

As the liquid crystal composition being the core composition of the conjugate fibers in the invention, the liquid crystal composition containing the halogen-containing liquid crystal compound is used. Thus, a place in which no liquid crystal molecules exist or a place in which the liquid crystal molecules exist in lump can be reduced, and thus the conjugate fibers in which disturbance of arrangement of the liquid crystal molecules is significantly small can be obtained. Further, the liquid crystal composition containing the halogen-containing liquid crystal compound has a high voltage holding ratio, and therefore such an effect is also produced as reduction of a driving voltage, power saving, improvement in contrast and improvement in uniformity of display or color.

The liquid crystal composition used in the invention preferably includes two kinds, namely one being liquid crystal composition α driven in a nematic phase or a chiral nematic phase having a helical pitch longer than 10 micrometers, and the other being liquid crystal composition β driven in a cholesteric phase having a helical pitch shorter than 1 micrometer. First, liquid crystal composition α has a dielectric anisotropy value of +2 or more or -2 or less, and is driven mainly by dielectric anisotropy of the liquid crystal composition. On the other hand, liquid crystal composition β is driven mainly by a flexoelectric effect.

First, liquid crystal composition α will be described.

Specific examples of liquid crystal composition α include a liquid crystal composition containing a halogen-containing liquid crystal compound selected from the group of compounds containing at least one piece of halogen as represented by formula (1) to formula (3) described below.

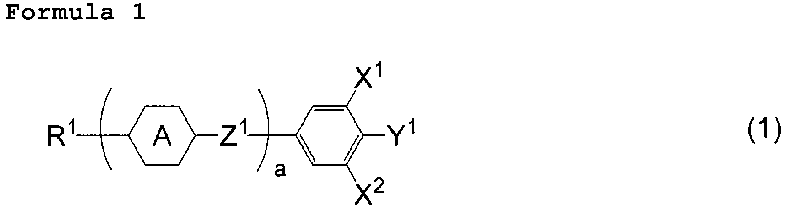

In formula (1), R¹ is alkyl having 1 to 12 carbons, alkoxy having 1 to 12 carbons or alkenyl having 2 to 12 carbons; ring A is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; Z¹ is a single bond, ethylene, carbonyloxy or difluoromethyleneoxy; X¹ and X² are each independently hydrogen or fluorine; Y¹ is fluorine, chlorine, alkyl having 1 to 12 carbons in which at least one piece of hydrogen is replaced by halogen, alkoxy having 1 to 12 carbons in which at least one piece of hydrogen is replaced by halogen, or alkenyloxy having 2 to 12 carbons in which at least one piece of hydrogen is replaced by halogen; and a is 1, 2, 3 or 4. In addition, when a is 2 or more, a plurality of ring A or Z¹ may be identical to or different from each other.

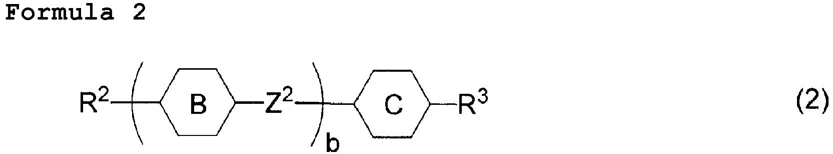

In formula (2), R² and R³ are each independently alkyl having 1 to 12 carbons, alkoxy having 1 to 12 carbons, alkenyl having 2 to 12 carbons, alkyl having 1 to 12 carbons in which at least one piece of hydrogen is replaced by halogen, or alkenyl having 2 to 12 carbons in which at least one piece of hydrogen is replaced by halogen; ring B and ring C are each independently 1,4-cyclohexylene, 1,4-phenylene, 2-fluoro-1,4-phenylene or 2,5-difluoro-1,4-phenylene; in which, at least one of R², R³, ring B and ring C contains halogen; Z² is a single bond, ethylene or carbonyloxy; and b is 1, 2 or 3. In addition, when b is 2 or more, a plurality of ring B or Z² may be identical to or different from each other.

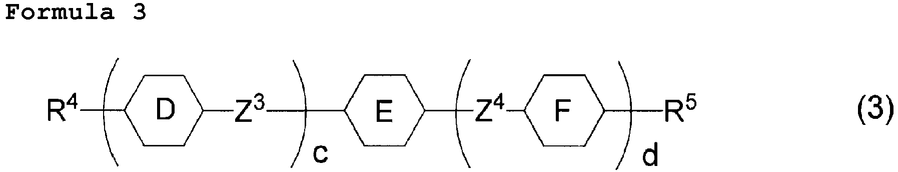

In formula (3), R⁴ and R⁵ are each independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one piece of hydrogen is replaced by halogen; ring D and ring F are each independently 1,4-cyclohexylene, 1,4-cyclohexenylene, 1,4-phenylene, 1, 4-phenylene in which at least one piece of hydrogen is replaced by fluorine or chlorine, or tetrahydropyran-2, 5-diyl; ring E is 2,3-difluoro-1,4-phenylene, 2-chloro-3-fluoro-1, 4-phenylene, 2,3-difluoro-5-methyl-1,4-phenylene, 3,4,5-trifluoronaphthalene-2,6-diyl or 7,8-difluorochroman-2,6-diyl; Z³ and Z⁴ are each independently a single bond, ethylene, carbonyloxy or methyleneoxy; c is 1, 2 or 3 and d is 0 or 1; and a sum of c and d is 3 or less. In addition, when c is 2 or more, a plurality of ring D or Z³ may be identical to or different from each other.

Specific examples of the halogen-containing liquid crystal compound represented by formula (1) include compounds represented by formula (1-1) to formula (1-34). In addition, in formula (1-1) to formula (1-34), R¹ is alkyl having 1 to 12 carbons, alkoxy having 1 to 12 carbons or alkenyl having 2 to 12 carbons.

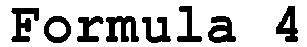

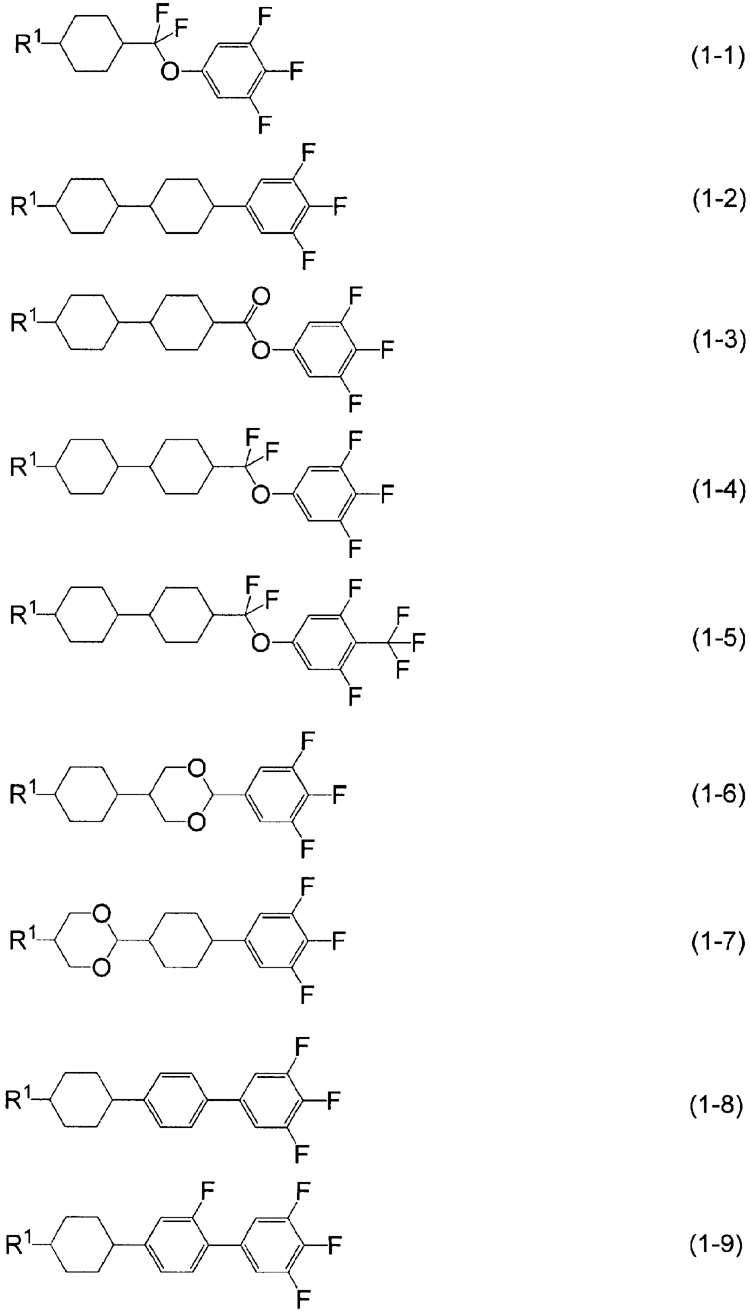

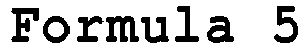

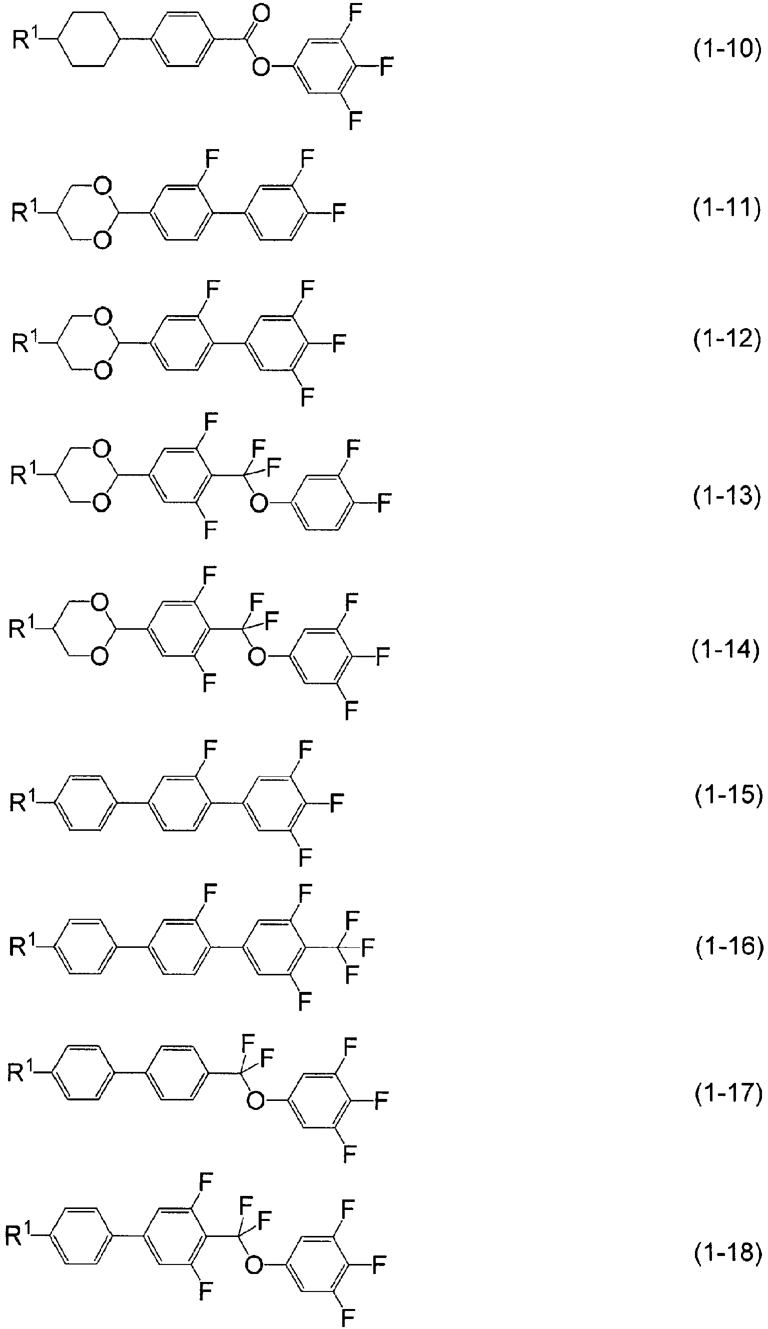

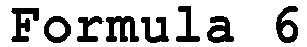

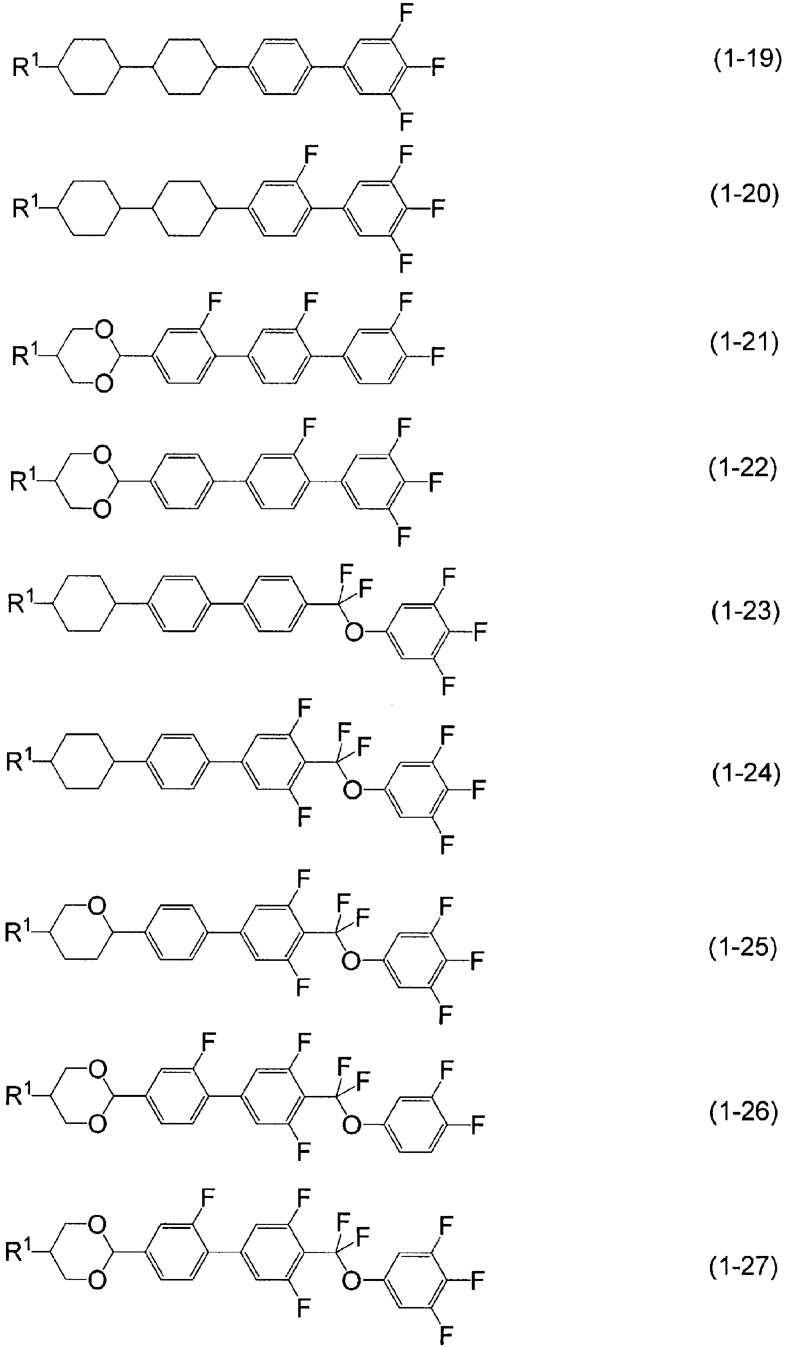

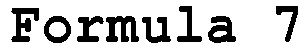

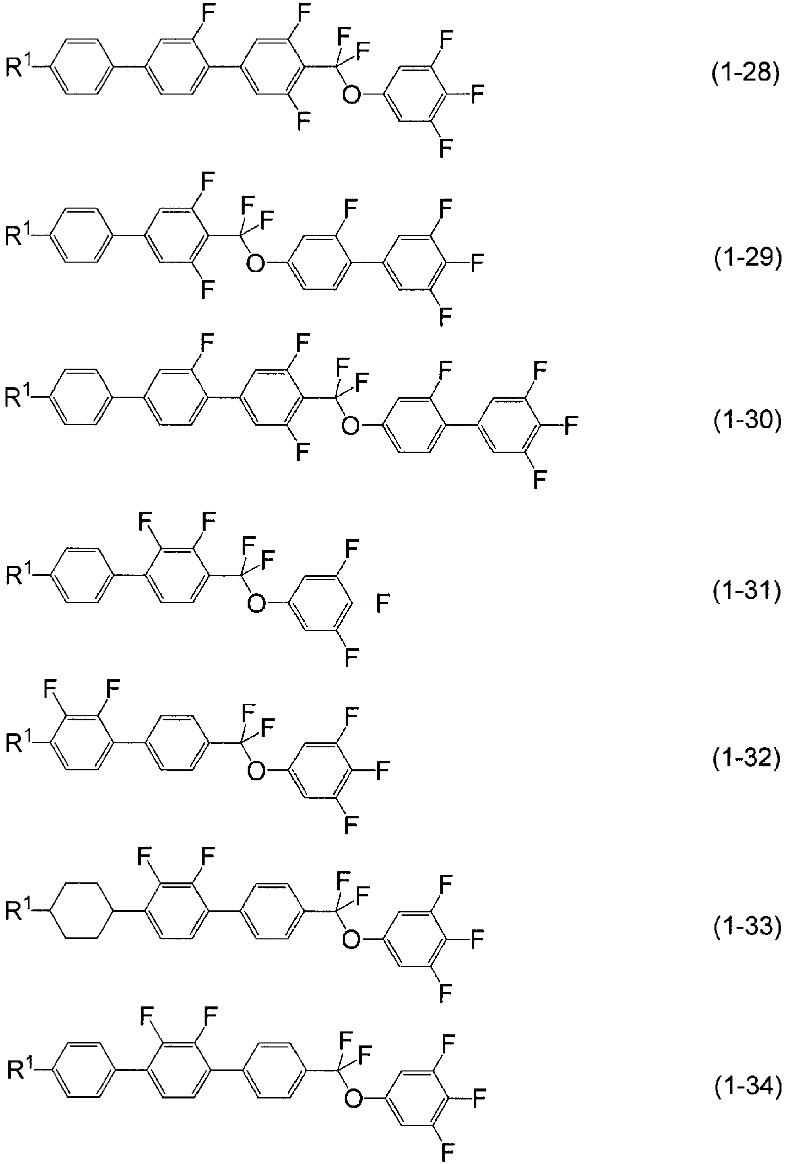

Specific examples of the halogen-containing liquid crystal compound represented by formula (2) include compounds represented by formula (2-1) to formula (2-13). In formula (2-1) to formula (2-13), R² and R³ are each independently alkyl having 1 to 12 carbons, alkoxy having 1 to 12 carbons, alkenyl having 2 to 12 carbons, alkyl having 1 to 12 carbons in which at least one piece of hydrogen is replaced by halogen, or alkenyl having 2 to 12 carbons in which at least one piece of hydrogen is replaced by halogen, and in R² and R³ in formula (2-1) to formula (2-6), formula (2-10) and formula (2-11), at least one is alkyl having 1 to 12 carbons in which at least one piece of hydrogen is replaced by halogen, or alkenyl having 2 to 12 carbons in which at least one piece of hydrogen is replaced by halogen.

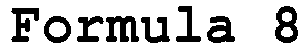

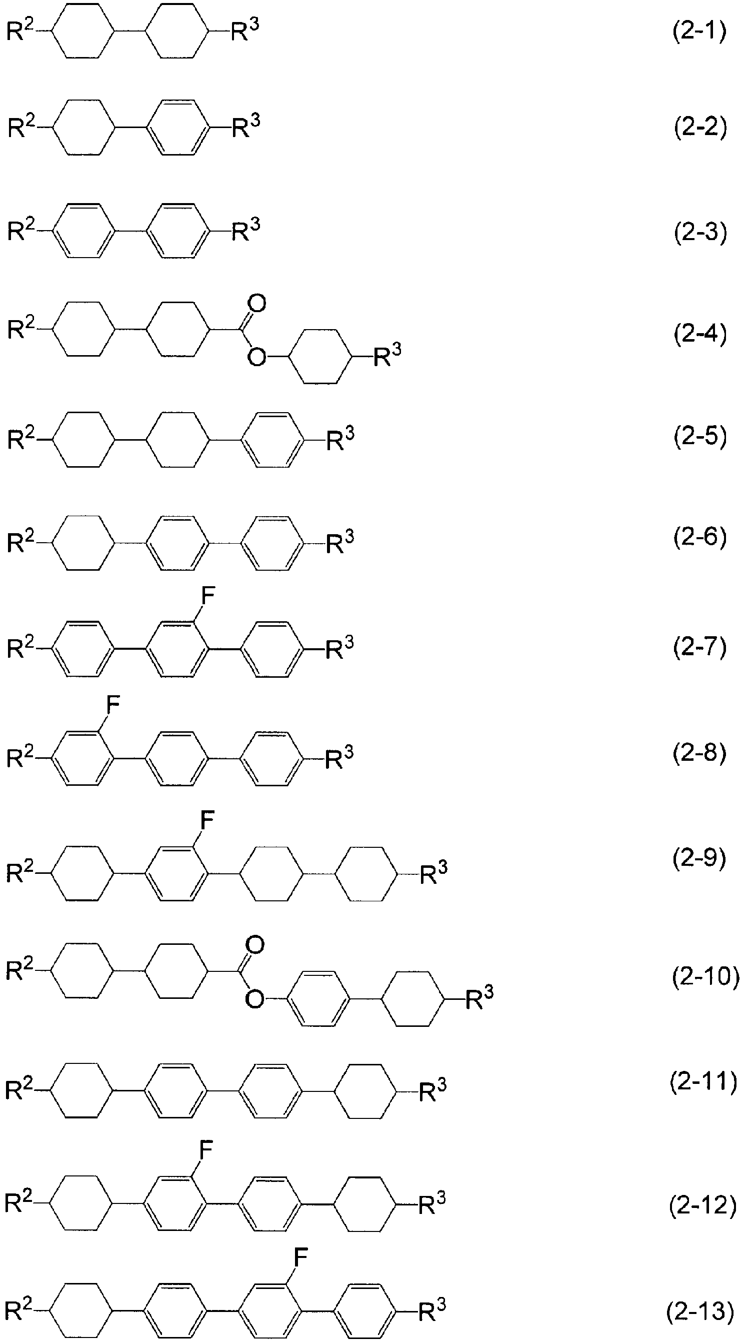

Specific examples of the halogen-containing liquid crystal compound represented by formula (3) include compounds represented by formula (3-1) to formula (3-19). In formula (3-1) to formula (3-19), R⁴ and R⁵ are each independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one piece of hydrogen is replaced by halogen.

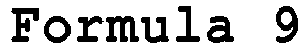

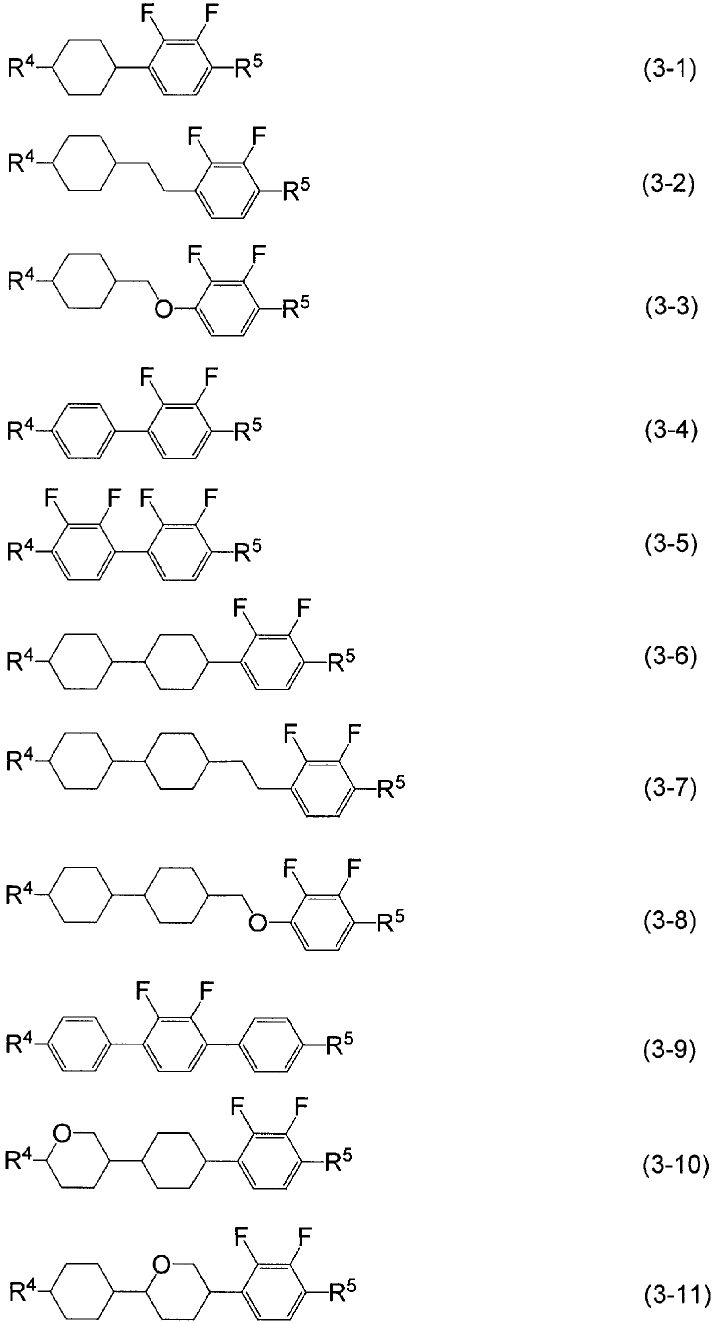

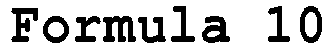

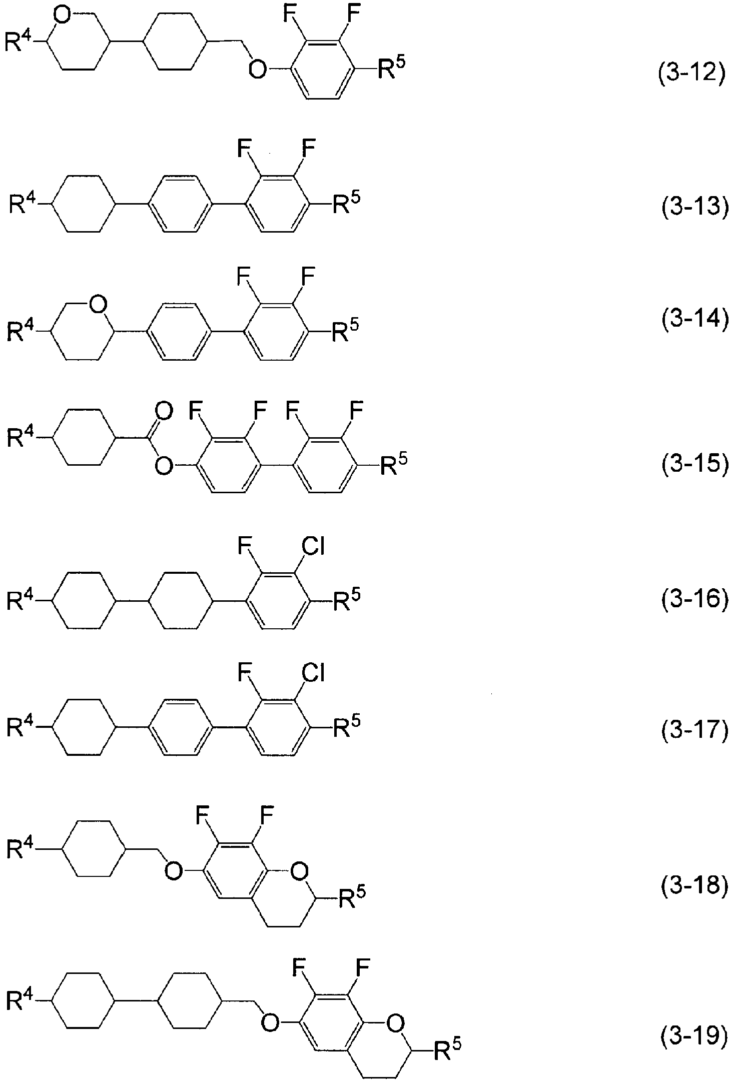

Liquid crystal composition α may further contain, in addition to the compound selected from the halogen-containing liquid crystal compound represented by formula (1) (hereinafter, also referred to as compound (1)), the halogen-containing liquid crystal compound represented by formula (2) (hereinafter, also referred to as compound (2)), and the halogen-containing liquid crystal compound represented by formula (3) (hereinafter, also referred to as compound (3)), any other liquid crystal compounds, an additive or the like. A term "any other liquid crystal compounds" refers to a liquid crystal compound different from compound (1), compound (2) and compound (3). Such a compound is mixed with the composition for the purpose of further adjusting characteristics. The additive is an optically active compound, an antioxidant, an ultraviolet light absorber, a dye, an antifoaming agent, a polymerizable compound, a polymerization initiator, a polymerization inhibitor or the like.

Next, main characteristics of compounds (1) to (3) being component compounds, and main advantageous effects of the liquid crystal composition on the characteristics in the invention will be described. The main characteristics of the component compounds are summarized in Table below based on the advantageous effects of the invention. In symbols in the Table, L stands for large or high, M stands for medium, and S stands for small or low. The symbols L, M, and S are classified based on qualitative comparison among the component compounds, and 0 (zero) means that a value is substantially zero.

**Table 1 Characteristics of Component**

| Characteristics | Component (1) | Component (2) | Component (3) |
|---|---|---|---|
| Maximum temperature | S to L | S to L | S to M |
| Viscosity | M to L | S to M | M |
| Optical anisotropy | M to L | M to L | M to L |
| Dielectric anisotropy | S to L¹⁾ | 0 | M to L²⁾ |
| Specific resistance | L | L | L |

| | | | |
|---|---|---|---|
| 1) Value of dielectric anisotropy is positive. 2) Value of dielectric anisotropy is negative, and the symbol stands for magnitude of an absolute value. | | | |

When compounds (1) to (3) being the component compounds are mixed with the liquid crystal composition, the main effects of the component compounds on the characteristics of the liquid crystal composition are as described below. Compound (1) increases the dielectric anisotropy. Compound (2) decreases viscosity or increases the maximum temperature. Compound (2) increases the dielectric constant in a minor axis direction.

A preferred combination of the component compounds in liquid crystal composition α is compound (1), compound (3), a combination of compound (1) and compound (2), a combination of compound (2) and compound (3), a combination of compound (1) and compound (3), or a combination of compound (1), compound (2) and compound (3). Further preferred combination thereof is a combination of compound (1) and compound (2), or a combination of compound (2) and compound (3).

The dielectric anisotropy of compound (1) is positive, and the dielectric anisotropy of compound (3) is negative. On the other hand, the dielectric anisotropy of compound (2) is substantially zero, and compound (2) is used for adjusting the characteristics other than the dielectric anisotropy. For driving the liquid crystal device at a low voltage, an absolute value of the dielectric anisotropy is desirably ensured, and therefore the combination of compound (1) and compound (2), or the combination of compound (2) and compounds (3) is desired. The composition containing compound (1) and compound (2) has the positive dielectric anisotropy, and the composition containing compound (2) and compound (3) has the negative dielectric anisotropy.

In liquid crystal compound α, a preferred proportion of compound (1) is about 10% by weight or more for increasing the dielectric anisotropy, and about 90% by weight or less for decreasing a minimum temperature or decreasing the viscosity. A further preferred proportion thereof is in the range of about 15% by weight to about 75% by weight. A particularly preferred proportion thereof is in the range of about 20% by weight to about 65% by weight.

In liquid crystal compound α, a preferred proportion of compound (2) is about 10% by weight or more for increasing the maximum temperature or decreasing the viscosity, and about 90% by weight or less for increasing the dielectric anisotropy. A further preferred proportion thereof is in the range of about 20% by weight to about 85% by weight. A particularly preferred proportion thereof is in the range of about 30% by weight to about 80% by weight.

In liquid crystal compound α, a preferred proportion of compound (3) is about 3% by weight or more for increasing the dielectric anisotropy, and about 30% by weight or less for decreasing the minimum temperature. A further preferred proportion thereof is in the range of about 3% by weight to about 25% by weight. A particularly preferred proportion thereof is in the range of about 5% by weight to about 20% by weight.

Next, preferred aspects of the component compounds will be described.

In formula (1) to formula (3), R¹ to R⁵, ring A to ring F, Z¹ to Z⁴, X¹ to X², Y¹ and a to b are as described below.

R¹ is alkyl having 1 to 12 carbons, alkoxy having 1 to 12 carbons or alkenyl having 2 to 12 carbons. Preferred R¹ is alkyl having 1 to 12 carbons for increasing stability to ultraviolet light or heat. R² and R³ are each independently alkyl having 1 to 12 carbons, alkoxy having 1 to 12 carbons, alkenyl of 2 to 12 carbons, alkyl having 1 to 12 carbons in which at least one piece of hydrogen is replaced by halogen, or alkenyl having the 2 to 12 carbons in which at least one piece of hydrogen is replaced by halogen. Preferred R² and R³ are alkenyl having 2 to 12 carbons for decreasing the viscosity, and alkyl having 1 to 12 carbons for increasing the stability. R⁴ and R⁵ are each independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one piece of hydrogen is replaced by halogen. Preferred R⁴ and R⁵ are alkyl having 1 to 12 carbons for increasing the stability, and alkoxy having 1 to 12 carbons for increasing the dielectric anisotropy. Preferred halogen is fluorine or chlorine, and further preferred halogen is fluorine.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Specific examples of preferred alkyl in which at least one piece of hydrogen is replaced by halogen include fluoromethyl, 2-fluoroethyl, 3-fluoropropyl, 4-fluorobutyl, 5-fluoropentyl, 6-fluorohexyl, 7-fluoroheptyl or 8-fluorooctyl. Further preferred alkyl is 2-fluoroethyl, 3-fluoropropyl, 4-fluorobutyl or 5-fluoropentyl for decreasing a threshold voltage.

Preferred alkoxy is methoxy, ethoxy, propoxy, butoxy, pentyloxy, hexyloxy or heptyloxy. For decreasing the viscosity, further preferred alkoxy is methoxy or ethoxy.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenylfor decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, for instance. Cis is preferred in alkenyl such as 2-butenyl, 2-pentenyl and 2-hexenyl. In the alkenyl, straight-chain alkenyl is preferred to branched-chain alkenyl.

Preferred alkenyloxy is vinyloxy, allyloxy, 3-butenyloxy, 3-pentenyloxyor4-pentenyloxy. Further preferred alkenyloxy is allyloxy or 3-butenyloxy for decreasing the viscosity.

Specific examples of preferred alkenyl in which at least one hydrogen is replaced by halogen is 2,2-difluorovinyl, 3,3-difluoro-2-propenyl, 4,4-difluoro-3-butenyl, 5, 5-difluoro-4-pentenyl or 6, 6-difluoro-5-hexenyl. Specific examples of further preferred alkenyl in which at least one hydrogen is replaced by halogen include 2,2-difluorovinyl or 4,4-difluoro-3-butenyl for decreasing the viscosity.

Ring A is 1,4-cyclohexylene, 1,4-phenylene, 2-fluoro-1,4-phenylene, 2,3-difluoro-1,4-phenylene, 2, 6-difluoro-1,4-phenylene, pyrimidine-2,5-diyl, 1, 3-dioxane-2, 5-diyl or tetrahydropyran-2, 5-diyl. Preferred ring A is 1, 4-phenylene or 2-fluoro-1, 4-phenylene for increasing the optical anisotropy. Ring B and ring C are each independently 1,4-cyclohexylene, 1,4-phenylene, 2-fluoro-1,4-phenylene or 2,5-difluoro-1,4-phenylene. Preferred ring B or ring C is 1,4-cyclohexylene for decreasing the viscosity, or 1,4-phenylene for increasing the optical anisotropy. Ring D and ring F are each independently 1,4-cyclohexylene, 1,4-cyclohexenylene, 1,4-phenylene, 1,4-phenylene in which at least one piece of hydrogen is replaced by fluorine or chlorine, or tetrahydropyran-2,5-diyl. Preferred ring D or ring F is 1,4-cyclohexylene for decreasing the viscosity, tetrahydropyran-2,5-diyl for increasing the dielectric anisotropy, and 1,4-phenylene for increasing the optical anisotropy. Ring E is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Preferred ring E is 2,3-difluoro-1,4-phenylene for increasing the dielectric anisotropy. With regard to the configuration of 1, 4-cyclohexylene, trans is preferred to cis for increasing the maximum temperature. Tetrahydropyran-2,5-diyl includes: 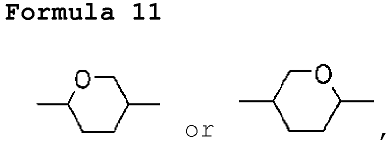 and preferably

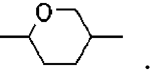

Z¹ is a single bond, ethylene, carbonyloxy or difluoromethyleneoxy. Preferred Z¹ is a single bond for decreasing the viscosity, and difluoromethyleneoxy for increasing the dielectric anisotropy. Z² is a single bond, ethylene or carbonyloxy. Preferred Z² is a single bond for decreasing the viscosity. Z³ and Z⁴ are each independently a single bond, ethylene, carbonyloxy or methyleneoxy. Preferred Z³ or Z⁴ is a single bond for decreasing the viscosity, and methyleneoxy for increasing the dielectric anisotropy.

X¹ and X² are each independently hydrogen or fluorine. Preferred X¹ and X² are fluorine for increasing the dielectric anisotropy.

Y¹ is fluorine, chlorine, alkyl having 1 to 12 carbons in which at least one piece of hydrogen is replaced by halogen, alkoxy having 1 to 12 carbons in which at least one piece of hydrogen is replaced by halogen, or alkenyloxy having 2 to 12 carbons in which at least one piece of hydrogen is replaced by halogen. Preferred Y¹ is fluorine for decreasing the minimum temperature.

Specific examples of preferred alkyl in which at least one hydrogen is replaced by halogen include trifluoromethyl. Specific examples of preferred alkoxy in which at least one piece of hydrogen is replaced by halogen include trifluoromethoxy. Specific examples of preferred alkenyloxy in which at least one piece of hydrogen is replaced by halogen include trifluorovinyloxy.

Then, a is 1, 2, 3 or 4. Preferred a is 2 for decreasing the minimum temperature, and is 3 for increasing the dielectric anisotropy. Then, b is 1, 2 or 3. Preferred b is 1 for decreasing the viscosity, and is 2 or 3 for increasing the maximum temperature. c is 1, 2 or 3, and d is 0 or 1, and a sum of c and d is 3 or less. Preferred c is 1 for decreasing the viscosity, and is 2 or 3 for increasing the maximum temperature. Preferred d is 0 for decreasing the viscosity, and is 1 for decreasing the minimum temperature.

In addition, in formula (1) to formula (3), when a to c are 2 or more, a plurality of ring A, ring B, ring D or Z¹ to Z³ may be identical to or different from each other.

Compound (1) is a compound having the positively large dielectric anisotropy. Preferred compound (1) is compound (1-1) to compound (1-34). Among the above compounds, at least one of compound (1) is preferably compound (1-4), compound (1-12), compound (1-14), compound (1-15), compound (1-17), compound (1-18), compound (1-23), compound (1-27), compound (1-28) or compound (1-29). At least two of compound (1) are preferably a combination of compound (1-12) and compound (1-15), a combination of compound (1-14) and compound (1-27), a combination of compound (1-18) and compound (1-24), a combination of compound (1-18) and compound (1-28), a combination of compound (1-24) and compound (1-28) or a combination of compound (1-28) and compound (1-29).

Compound (2) is a compound having the small dielectric anisotropy. Preferred compound (2) is compound (2-1) to compound (2-13) described above. Among the above compounds, at least one of compound (2) is preferably compound (2-1), compound (2-3), compound (2-5), compound (2-6) or compound (2-7). At least two of compound (2) are a combination of compound (2-1) and compound (2-3) or a combination of compound (2-1) and compound (2-5).

Compound (2) is a compound having the negatively large dielectric anisotropy. A preferred compound (3) is compound (3-1) to compound (3-19) described above. Among the above compounds, at least one of compound (3) is preferably compound (3-1), compound (3-3), compound (3-4), compound (3-6), compound (3-8) or compound (3-13). At least two of compound (3) are preferably a combination of compound (3-1) and compound (3-6), a combination of compound (3-1) and compound (3-13), a combination of compound (3-3) and compound (3-6), a combination of compound (3-3) and compound (3-13), a combination of compound (3-4) and compound (3-6), or a combination of compound (3-4) and compound (3-8).

The additive that may be added to liquid crystal composition α is, as described above, the optically active compound, the antioxidant, the ultraviolet light absorber, the dye, the antifoaming agent, the polymerizable compound, the polymerization initiator, the polymerization inhibitor or the like. The optically active compound is added to liquid crystal composition α for the purpose of inducing a helical structure of liquid crystal to give a twist angle. Specific examples of such an optically active compound include compound (4-1) to compound (4-5) shown below. In the formulas, an asterisk "*" represents asymmetrical carbon.

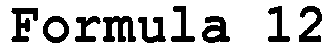

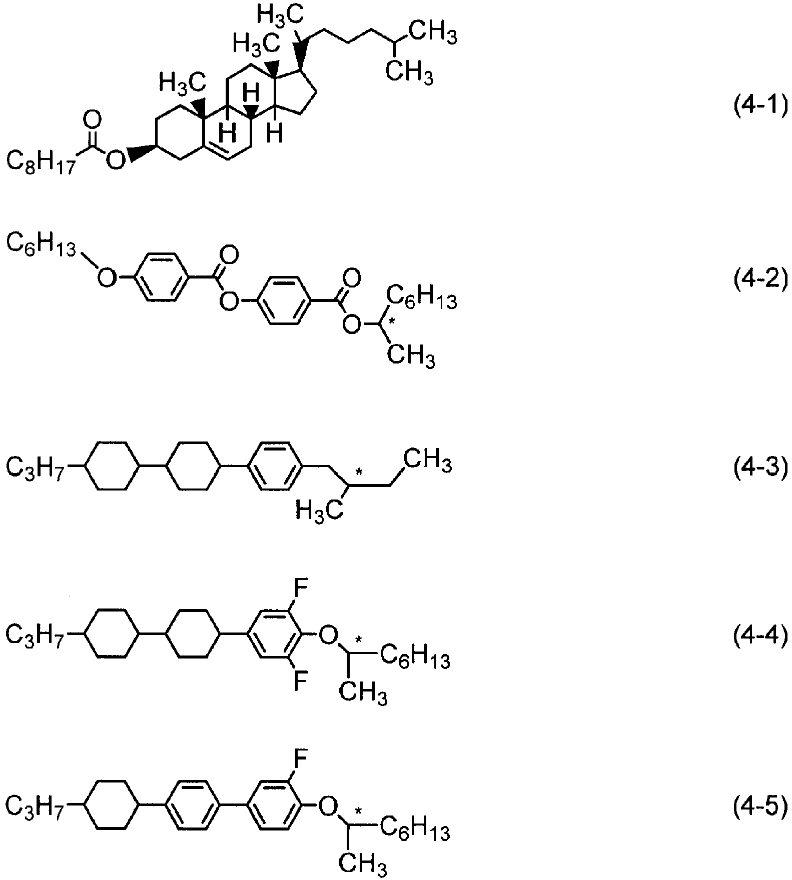

A preferred proportion of the optically active compound is about 5% by weight or less. A further preferred proportion thereof is in the range of about 0.01% by weight to about 2% by weight.

For maintaining the large voltage holding ratio at room temperature and also at a temperature close to the maximum temperature after the device has been used for a long time, the antioxidant is added to liquid crystal composition α. Specific examples of the preferred antioxidant include compound (5) described below. In the formula, z is an integer from 1 to 9.

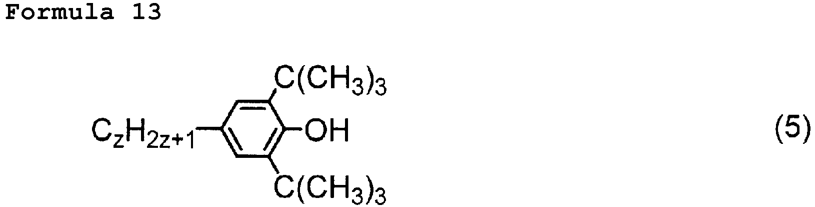

In compound (5), preferred z is 1, 3, 5, 7 or 9. Further preferred z is 7. Compound (5) in which z is 7 has the small volatility, and therefore is effective in maintaining the large voltage holding ratio at room temperature and also at the temperature close to the maximum temperature after the device has been used for a long time. A preferred proportion of the antioxidant is about 50 ppm or more for obtaining the above advantage, and about 600 ppm or less for preventing the maximum temperature from being decreased or preventing the minimum temperature from being increased. A further preferred proportion thereof is in the range of about 100 ppm to about 300 ppm.

Specific examples of the preferred ultraviolet light absorber include a benzophenone derivative, a benzoate derivative and a triazole derivative. A light stabilizer such as amine having steric hindrance is also preferred. A preferred proportion of the above absorbent or stabilizer is about 50 ppm or more for obtaining the above advantage, and about 10,000 ppm or less for preventing the maximum temperature from being decreased or for preventing the minimum temperature from being increased. A further preferred proportion thereof is in the range of about 100 ppm to about 10,000 ppm.

In order to be adapted for a device having a guest host (GH) mode, a dichroic dye such as an azo dye or an anthraquinone dye is added to liquid crystal composition α. A preferred proportion of the dye in liquid crystal composition α is in the range of about 0.01% by weight to about 10% by weight. The antifoaming agent such as dimethyl silicone oil or methyl phenyl silicone oil is added to the composition for preventing foam formation. A preferred proportion of the antifoaming agent is about 1 ppm or more for obtaining the above advantage, and about 1000 ppm or less for preventing poor display. A further preferred proportion thereof is in the range of about 1 ppm to about 500 ppm.

Compounds (1) to (3) as the component compounds can be produced by a publicly known method. For example, compound (1-2) and compound (1-8) can be produced by the method described in JP H2-233626 A. Compound (2-1) can be produced by the method described in JP S59-176221 A. Compound (3-1) and compound (3-6) can be produced by the method described in JP H2-503441 A. The compound represented by formula (5) in which z is 1 is available from Aldrich (Sigma-Aldrich Corporation). The compound represented by formula (5) in which z is 7, or the like can be produced by the method described in US 3660505 B.

The compounds whose synthetic methods are not described above can be produced by the methods described in the books such as Organic Syntheses (John Wiley & Sons, Inc.), Organic Reactions (John Wiley & Sons, Inc.), Comprehensive Organic Synthesis (Pergamon Press), and New Experimental Chemistry Course (Shin Jikken Kagaku Koza in Japanese) (Maruzen Co., Ltd. publication). The liquid crystal composition is prepared by a publicly known method from the compounds thus obtained. For example, the component compounds are mixed, and the resultant mixture is dissolved with each other by heating.

Liquid crystal composition α mainly has the minimum temperature of about -10°C or lower, the maximum temperature of about 70°C or higher, and the optical anisotropy in the range of about 0.07 to about 0.20. The device containing liquid crystal composition α has the large voltage holding ratio. Liquid crystal composition α is suitable for an AM (active matrix) device. In particular, liquid crystal composition α is suitable for a transmissive AM device. The composition having the optical anisotropy in the range of about 0.08 to about 0.25, and the composition having the optical anisotropy in the range of about 0.10 to about 0.30 may be prepared by controlling the proportions of the component compounds or by mixing any other liquid crystal compounds. The composition can be used as the composition having the nematic phase, and as the optically active composition by adding the optically active compound.

Subsequently, liquid crystal composition β will be described.

The helical pitch of liquid crystal composition β of the present application is 1 micrometer or less, preferably less than 500 nanometers, further preferably less than 400 nanometers, and most preferably 300 nanometers or less.

A helical axis of liquid crystal composition β is preferably parallel to a direction of the fiber, and in the above case, is preferably driven by an electric field in a direction perpendicular to the helical axis.

Liquid crystal composition β may be a composition consisting of a chiral compound, but preferably consists of an achiral component T and a chiral agent.

As the achiral component T, preferably, two mesogens are linked by a spacer, and the spacer contains one or more kinds of bimesogenic compounds having 3 or more atoms and an odd number of atoms in the group.

The achiral component T preferably contains a bimesogenic compound represented by formula (6).
**Formula 14**

**R⁶-MG⁶-X⁶-Sp-X⁶-MG⁶-R⁶** **(6)**

In formula (6), R⁶ is each independently cyanogen (CN), fluorine, chlorine, or alkyl having 1 to 10 carbons in which any piece of -CH²- may be replaced by oxygen, sulfur, -COO- and -OCO-, however, a case where any pieces of oxygen are adjacent to each other is excluded, and in the alkyl, any piece of hydrogen may be replaced by halogen.

MG⁶ each independently represents mesogen, and Sp is alkylene having 5 to 40 carbons, and X⁶ is each independently -CO-O-, -O-CO-, -CH₂-O-, -O-CH₂-, -CF₂-O-, -O-CF₂-, -CH₂-CH₂-, -C≡C-, -CH(CH₃)-N=CH- or a single bond, and is preferably a single bond.

In formula (6), R⁶, MG⁶ and X⁶ may be identical to or different from each other.

### Chiral agent

The chiral agent that may be contained in liquid crystal composition β of the invention is the optically active compound.

As the chiral agent used for liquid crystal composition β of the invention, a compound having large helical twisting power (HTP) is preferred. With regard to the compound having the large helical twisting power, an adding amount required for obtaining the desired pitch can be decreased, and therefore an increase in driving voltage can be suppressed, and such a case is practically advantageous. Specifically, compounds represented by compounds (K1) to (K7) are preferred. Moreover, in compounds (K4) to (K7), binaphtyl and octahydronaphthyl are an optically active site, and chilarity of the chiral agent is not considered.

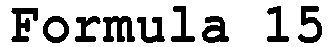

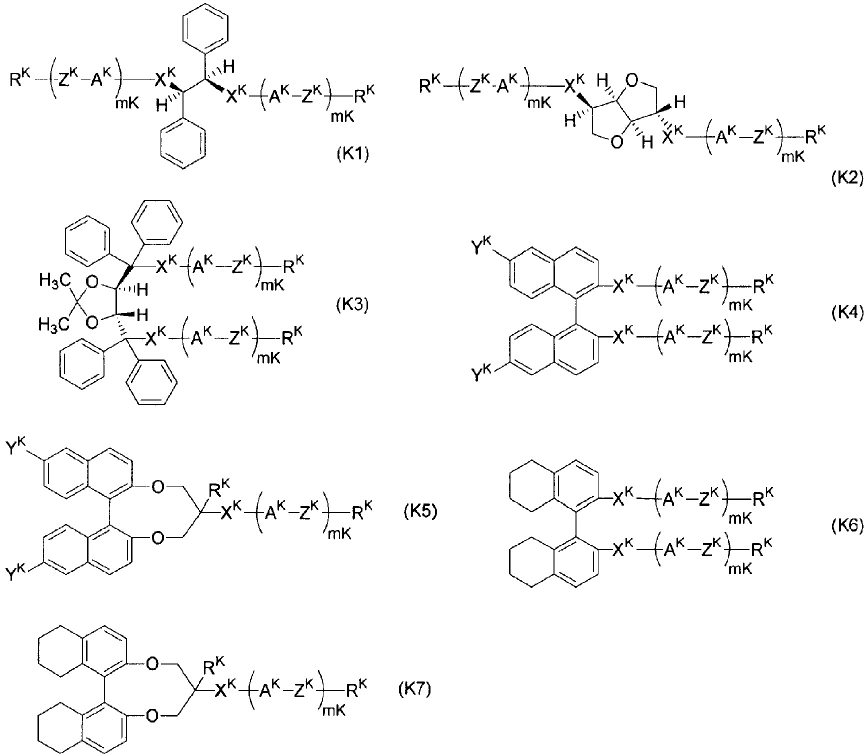

(In the formulas described above, R^{K} is each independently hydrogen, halogen, -C=N, -N=C=O, -N=C=S or alkyl having 1 to 20 carbons, and in the alkyl, at least one piece of -CH₂- may be replaced by -O-, -S-, -COO- or -OCO-, and in the alkyl, at least one piece of -CH₂-CH₂- may be replaced by -CH=CH-, -CF=CF- or -C≡C-, and in the alkyl, at least one piece of hydrogen may be replaced by fluorine or chlorine;
A^{K} is each independently an aromatic 6-membered ring to 8-membered ring, a non-aromatic 3-membered ring to 8-membered ring or a condensed ring having 9 or more carbons, and in the rings, at least one piece of hydrogen may be replaced by halogen, alkyl having 1 to 3 carbons or haloalkyl, and in the rings, -CH₂- may be replaced by -O-, -S-, or -NH-, and -CH= may be replaced by -N=;
Y^{K} is each independently hydrogen, halogen, alkyl having 1 to 3 carbons, haloalkyl having 1 to 3 carbons, an aromatic 6 to 8 membered ring, a non-aromatic 3 to 8 membered ring or a condensed ring having 9 or more carbons, and in the rings, at least one piece of hydrogen may be replaced by halogen, alkyl having 1 to 3 carbons or haloalkyl, and in the alkyl, -CH₂- may be replaced by -O-, -S-, or -NH-, and -CH= may be replaced by -N=;
Z^{K} is each independently a single bond and alkylene having 1 to 8 carbons, and in the alkylene, at least one piece of -CH₂-may be replaced by -O-, -S-, -COO-, -OCO-, -CSO-, -OCS-, -N=N-, -CH=N- or -N=CH-, and in the alkylene, at least one piece of -CH₂-CH₂- may be replaced by -CH=CH-, -CF=CF- or -C=C-, and in the alkylene, at least one piece of hydrogen may be replaced by halogen;
X^{K} is each independently a single bond, -COO-, -OCO-, -CH₂O-, -OCH₂-, -CF₂O-, -OCF₂- or -CH₂CH₂-; and
mK is each independently an integer from 1 to 4.)

Among the above compounds, as the chiral agent added to the liquid crystal composition, compounds (K4-1) to (K4-6), (K5-1) to (K5-3), (K6-1) to (K6-6) and (K7-1) to (K7-2) are preferred, and compounds (K4-5), (K5-1) to (K5-3), (K6-5) to (K6-6) and (K7-1) to (K7-2) are further preferred.

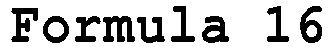

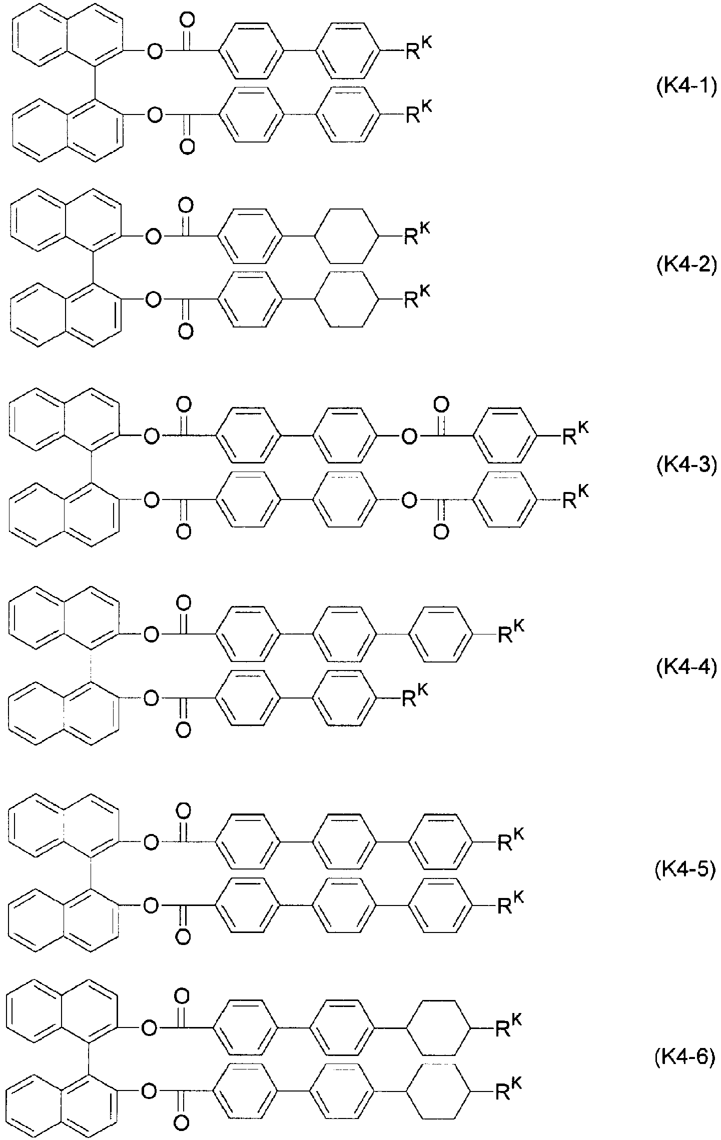

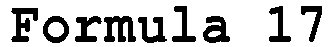

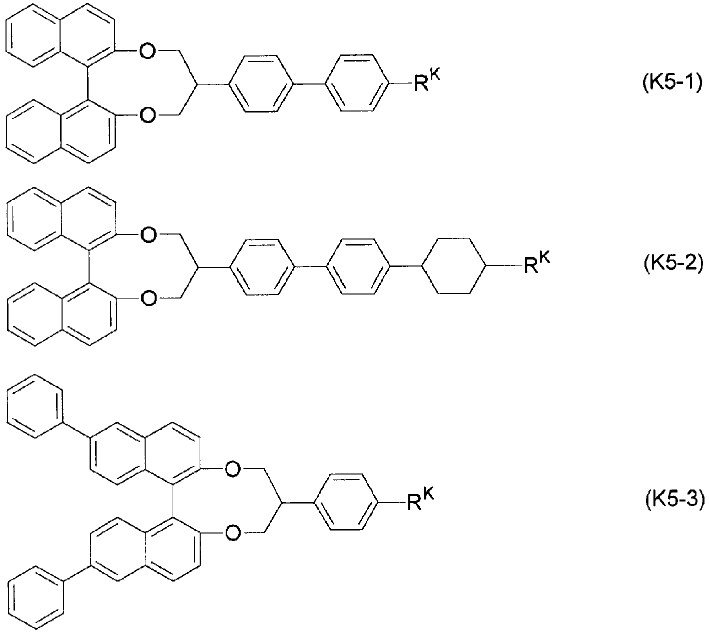

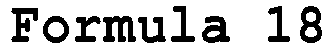

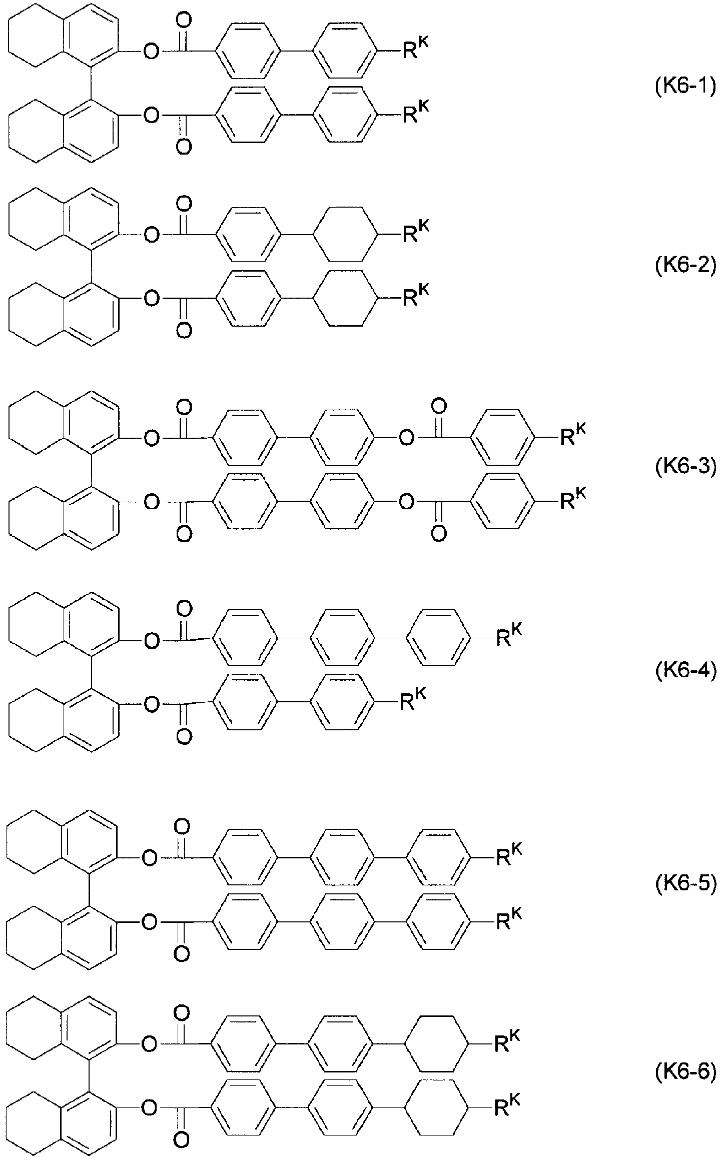

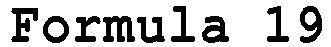

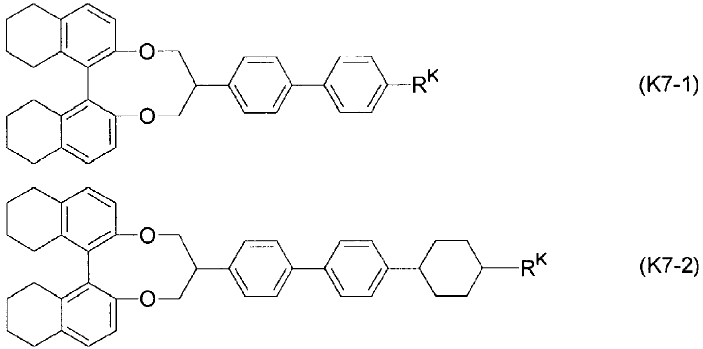

(In the formulas, R^{K} is independently alkyl having 3 to 10 carbons or alkoxy having 3 to 10 carbons, and in the alkyl or the alkoxy, at least one piece of -CH₂-CH₂- may be replaced by -CH=CH-).

As the chiral agent to be incorporated into liquid crystal composition β, one compound or a plurality of compounds may be used.

In order to realize liquid crystal composition β having the desired helical pitch, the chiral agent is incorporated thereinto in an amount of preferably 1 to 40% by weight, further preferably 1 to 10% by weight, and particularly preferably 2 to 8% by weight, based on a total weight of liquid crystal composition β.

Specific examples of the additive that may be added to liquid crystal compound β include the additives described in the section of liquid crystal composition α.

### Conjugate fibers

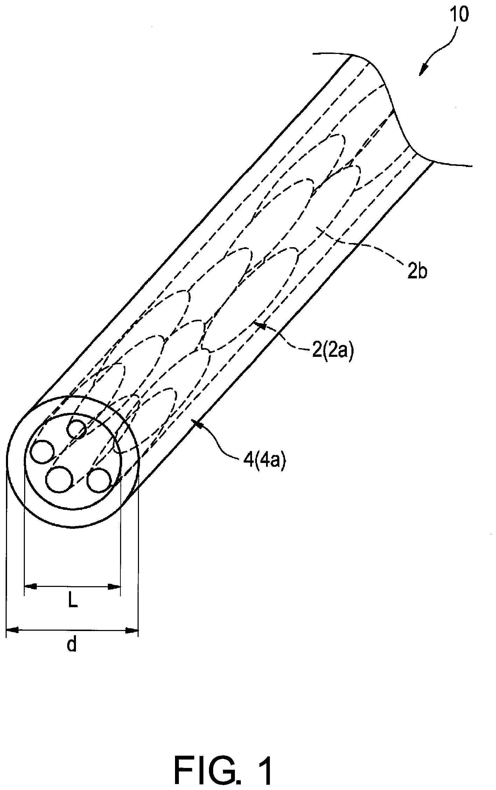

Figure 1 shows a perspective view of conjugate fibers 10 with an encapsulated liquid crystal (hereinafter, also referred to as "conjugate fibers 10.") of the invention.

Conjugate fibers 10 with the encapsulated liquid crystal in the invention are sheath-core conjugate fibers having, as core component 2, liquid crystal composition 2a containing halogen-containing liquid crystal compound 2b. The halogen-containing liquid crystal compound is preferably continuously distributed in core component 2, which is not particularly limited thereto. A state in which the compound is continuously distributed herein means that liquid crystal composition 2a is arranged over an entire region of core component 2 without discontinuity, and means that a sum of a length of a part in which liquid crystal composition 2a is discontinued in the region of core component 2 is less than 1% of a whole length of conjugate fibers 10. If liquid crystal composition 2a is discontinuous, halogen-containing liquid crystal compound 2b also becomes discontinuous in the above part in core component 2, resulting in causing a part not driven by application of voltage. However, if liquid crystal composition 2a is continuously distributed without discontinuity, the part not driven is not caused, display unevenness is eliminated, and a driving area can be increased.

An alignment direction of liquid crystal composition 2a containing halogen-containing liquid crystal compound 2b in conjugate fibers 10 in the invention is not particularly limited, but is preferably parallel to or perpendicular to a fiber axis. If conjugate fibers 10 take such an alignment direction, conjugate fibers 10 can be preferably used in the form of a liquid crystal display device having small light leakage and high contrast. Moreover, a degree of alignment thereof can be recognized by a change in a light transmission quantity when conjugate fibers 10 are rotated in observation by a polarizing microscope in a (crossed nicol) state in which polarizing plates are orthogonally crossed.

When liquid crystal composition 2a is a cholesteric liquid crystal or a chiral nematic liquid crystal each having the helical structure, in the helical structure, the helical axis may be parallel to or perpendicular to the fiber axis. When the helical structure takes the helical axis in parallel to the fiber axis, for example, the conjugate fibers can be preferably used in the form of an ultra-high speed response liquid crystal display device. Moreover, when the helical structure takes the helical axis perpendicularly to the fiber axis, for example, the conjugate fibers can be used in the form of a wavelength selective reflection device or the like.

Sheath component-forming material 4a of sheath component 4 of conjugate fibers 10 in the invention is not particularly limited, but is preferably a fiber-formable material. Specific examples of the fiber-forming material include a polymer material such as polyvinyl alcohol, polyethylene glycol, polyethylene oxide, polyvinylpyrrolidone, polyethylene, polypropylene, polyethylene terephthalate, polylactic acid, polyamide, polyurethane, polystyrene, polysulfone, polyethersulfone, polyvinylidene fluoride, polyacrylonitrile, polymethyl methacrylate, polyglycolic acid, polycaprolactone, polyvinyl acetate, polycarbonate, polyimide, polyetherimide, cellulose, a cellulose derivative, chitin, chitosan, collagen, gelatin and a copolymer thereof; and an inorganic material such as alumina, silica, titania, zirconia and hydroxyapatite. The above fiber-forming materials can be used in one kind, or in combination of two or more kinds. A mixing ratio when the materials are mixed and used is not particularly limited, and can be appropriately set in view of physical properties of the fibers obtained. The light transmission quantity can be improved if sheath component-forming material 4a of sheath component 4 is an amorphous polymer having transparency, and therefore the conjugate fibers can be preferably used in the form of the liquid crystal display device, a wavelength selective reflection device or the like. Specific examples of such an amorphous polymer include polymethyl methacrylate, polyvinyl acetate, polyvinylpyrrolidone, polycarbonate, polystyrene and gelatin.

If sheath component-forming material 4a of sheath component 4 of the invention is a component having refractivity close to the refractivity of liquid crystal composition 2a, light scattering in an interface can be reduced, and therefore such a case is preferred. Specific examples of such sheath component-forming material 4a of sheath component 4 include polyvinylpyrrolidone, polymethyl methacrylate, polystyrene, polycarbonate and gelatin.

Outer diameter d of conjugate fibers 10 of the invention is not particularly limited, but a mean outer diameter is preferably 5 micrometers or less, further preferably 3 micrometers or less, and particularly preferably 1 micrometer or less. If the mean outer diameter is 5 micrometers or less, a degree of alignment of liquid crystal composition 2a in the fibers can be improved, and if the mean outer diameter is 3 micrometers or less, the degree of alignment can be further improved, and if the mean outer diameter is 1 micrometer or less, liquid crystal composition 2a can be aligned at a significantly high level. Moreover, from a viewpoint of suppressing leakage of the liquid crystal composition in the fibers, the mean outer diameter is preferably 50 nanometers or more, and preferably 100 nanometers or more.

When a cross sectional shape of conjugate fibers 10 is an elliptic shape, a length of a major axis of the outer diameter is preferably 7 micrometers or less, and a length of a minor axis thereof is preferably 3 micrometers or less, which is not particularly limited thereto. A cross sectional area of conjugate fibers 10 is not particularly limited, but is preferably 20 square micrometers or less, further preferably 8 square micrometers, and particularly preferably 1 square micrometer or less.

A fluctuation of an outer diameter of conjugate fibers 10 of the invention is not particularly limited, but a coefficient of variation (CV value) of the outer diameter is preferably 20% or less, further preferably 15% or less, and particularly preferably 10% or less. If the CV value of the outer diameter is 20% or less, the light transmission quantity or a light reflection quantity of each of the fibers becomes uniform, and therefore such a case is preferred. The CV value of the outer diameter herein refers to a value obtained by dividing a standard deviation of the outer diameter of each fiber by the outer diameter thereof and expressed in terms of percentage.

Inner diameter L of conjugate fibers 10 in the invention (namely, an outer diameter of the core component) is not particularly limited, but a mean inner diameter is preferably 4 micrometers or less, further preferably 2.5 micrometers or less, and still further preferably 0.8 micrometer or less. If the mean outer diameter is 4 micrometers or less, halogen-containing liquid crystal compound 2b can be further uniformly aligned therein, and if the mean inner diameter is 2.5 micrometers or less, halogen-containing liquid crystal compound 2b can be still further uniformly aligned therein, and if the mean inner diameter is 0.8 micrometer or less, halogen-containing liquid crystal compound 2b can be still further uniformly aligned therein. Moreover, from a viewpoint of securing the driving area, the mean inner diameter is preferably 10 nanometers or more, and further preferably 50 nanometers or more.

Specific examples of a method of measuring inner diameter L of conjugate fibers 10 include a method of measuring an inner diameter from an image photographed by a polarizing microscope or a transmission electron microscope, and a method of measuring an inner diameter from an image obtained by cutting conjugate fibers 10 in a direction perpendicular to the fiber axis thereof, and photographing a cross section by a scanning electron microscope.

A thickness of sheath component 4 in the invention is not particularly limited, but is preferably in the range of 0.1 to 1 micrometer, and further preferably in the range of 0.2 to 0.5 micrometer. If the thickness of sheath component 4 is 0.1 micrometer or more, encapsulated liquid crystal composition 2a becomes hard to leak from the fibers, and if the thickness thereof is 0.2 micrometer or more, leakage of the liquid crystal can be sufficiently prevented. Moreover, if the thickness of sheath component 4 is 1 micrometer or less, light scattering can be reduced, and if the thickness thereof is 0.5 micrometer or less, light scattering can be sufficiently suppressed. The thickness of sheath component 4 herein can be determined by dividing a sum of outer diameter d and inner diameter L of conjugate fibers 10 by 2.

The cross-sectional shape of conjugate fibers 10 of the invention is not particularly limited, and specific examples thereof include a circular shape, an elliptic shape, a flat shape and a semicircular shape. The cross-sectional shape of conjugate fibers 10 can be appropriately set in view of physical properties of the fibers obtained or alignability of the liquid crystal component.

### Method of manufacturing conjugate fibers

Specific examples of a method of manufacturing conjugate fibers 10 of the invention include a melt spinning method, a dry spinning method, a wet spinning method, a spunbond method, a meltblown method, a flash spinning method, an electrospinning method and a force spinning method, and from a viewpoint of obtaining uniform and ultrafine fibers, the electrospinning method is preferred. The electrospinning method will be described below, but not limited thereto.

The electrospinning method means a method of obtaining the fibers on a collector by discharging a spinning solution, and simultaneously acting the electric field thereon to process the discharged spinning solution into the fibers. Specific examples thereof include a method of spinning fibers by extruding a spinning solution from a nozzle, and simultaneously acting the electric field thereon, a method of spinning fibers by bubbling a spinning solution, and simultaneously acting the electric field thereon, and a method of spinning fibers by guiding a spinning solution onto a surface of a cylindrical electrode, and simultaneously acting the electric field thereon. According to the above methods, uniform fibers having a diameter of 10 nanometers to 10 micrometers can be obtained.

Specific examples of the method of manufacturing conjugate fibers 10 in the invention include a method of performing electrospinning of fibers by separately discharging a sheath solution and a liquid crystal material from a double tube nozzle, and a method of performing electrospinning of a spinning solution prepared by mixing a polymer, a liquid crystal material and a solvent, and simultaneously allowing phase separation. From ease of driving the liquid crystal composition, however, the method of performing electrospinning of the fibers by separately discharging the sheath solution and the liquid crystal composition from the double tube nozzle is preferred. The conjugate fibers with the encapsulated liquid crystal prepared by the method of performing electrospinning of the spinning solution prepared by mixing the polymer, the liquid crystal composition and the solvent, and simultaneously allowing phase separation include a state in which the polymer component is mixed with the liquid crystal material, and therefore alignment of the liquid crystal is disturbed, and good characteristics from as the liquid crystal display device are unable to be obtained.

The sheath solution is not particularly limited as long as the solution has spinnability, but such a solution can be used as a solution obtained by dissolving a fiber-forming material (sheath component-forming material 4a) in a solvent, and a solution obtained by melting a fiber-forming material by heat or laser irradiation. As the sheath solution used in the invention, the solution obtained by dissolving the fiber-forming material in the solvent is preferably used in view of capability of easily controlling smallness or uniformity of a diameter of conjugate fibers 10, and continuity and the alignability of liquid crystal composition 2a.

Specific examples of the fiber-forming material include a polymer material such as polyvinyl alcohol, polyethylene glycol, polyethylene oxide, polyvinylpyrrolidone, polyethylene, polypropylene, polyethylene terephthalate, polylactic acid, polyamide, polyurethane, polystyrene, polysulfone, polyethersulfone, polyvinylidene fluoride, polyacrylonitrile, polymethyl methacrylate, polyglycolic acid, polycaprolactone, polyvinyl acetate, polycarbonate, polyimide, polyetherimide, cellulose, a cellulose derivative, chitin, chitosan, collagen and a copolymer thereof; and an inorganic material such as alumina, silica, titania, zirconia and hydroxyapatite. The above fiber-forming materials may be used in one kind, in combination of two or more kinds. A mixing ratio when the above materials are mixed and used is not particularly limited, and can be appropriately set in view of physical properties of the fibers obtained. In conjugate fibers 10 of the invention, if sheath component-forming material 4a of sheath component 4 is an amorphous polymer, conjugate fibers 10 can be used in the form of an optical device, and therefore such a case is preferred. Specific examples of such an amorphous polymer include polymethyl methacrylate, polyvinyl acetate, polyvinylpyrrolidone, polycarbonate and polystyrene.

Specific examples of the solvent in which the fiber-forming material is dissolved include water, methanol, ethanol, propanol, acetone, N,N-dimethylformamide, N,N-dimethylacetamide, dimethyl sulfoxide, N-methyl-2-pyrrolidone, toluene, xylene, pyridine, formic acid, acetic acid, tetrahydrofuran, dichloromethane, chloroform, dichlorobenzene, 1,1,1,3,3,3-hexafluoroisopropanol and a mixture thereof. The continuity and the alignability of liquid crystal composition 2a, the diameter of conjugate fibers 10, or the like can be easily controlled by using the above mixture, and therefore such a case is preferred. A composition of the mixture is not particularly limited, but is preferably a mixture of a polar solvent and a nonpolar solvent. Specific examples of the polar solvent include water, methanol, ethanol, propanol, acetone, N,N-dimethylformamide, N,N-dimethylacetamide, dimethyl sulfoxide and N-methyl-2-pyrrolidone. Specific examples of the nonpolar solvent include toluene, xylene, tetrahydrofuran, chloroform, dichloromethane and dichlorobenzene. Moreover, a mixing ratio thereof is not particularly limited, and specific examples thereof include the range of 5 : 95 to 95 : 5 in terms of a weight ratio when two kinds of solvents are mixed.

For the purpose of improving stability and fiber-forming properties of electrospinning, an additive may be further incorporated into the sheath solution. Specific examples of the additive include an anionic surfactant such as sodium dodecyl sulfate, a cationic surfactant such as tetrabutylammonium bromide, a nonionic surfactant such as polyoxyethylene sorbitan monolaurate, and inorganic salt such as sodium chloride. A concentration of the additive is preferably in the range of 0.1 to 5% by weight, and further preferably in the range of 0.2 to 2% by weight, based on the fiber-forming material. If the concentration is 0.1% by weight or more, an effect corresponding to the use is obtained, and if the concentration is 5% by weight or less, an influence on driving the liquid crystal is small, and therefore such a case is preferred.

Any component other than the components described above may be contained as the component of the sheath solution within the range in which the advantageous effects of the invention are not adversely affected.

A method of preparing the sheath solution is not particularly limited, and specific examples thereof include a method such as stirring and ultrasonic treatment. Moreover, mixing order is not particularly limited, either, and the components may be mixed simultaneously or successively. A stirring time when the sheath solution is prepared by stirring is not particularly limited as long as the fiber-forming material is uniformly dissolved in the solvent, and for example, stirring may be performed for about 1 to 24 hours.

In order to obtain the fibers by electrospinning, viscosity of the sheath solution is adjusted preferably to the range of 10 to 5,000 mPa·s, and further preferably to the range of 50 to 2,000 mPa·s. If the viscosity is 10 mPa·s or more, spinnability for forming the fibers is ensured, and if the viscosity is 5,000 mPa·s or less, the sheath solution is easily discharged. If the viscosity is in the range of 50 to 2,000 cPmPa·s, good spinnability is ensured in a wide range of spinning conditions, and therefore such a case is preferred. A ratio of the viscosity of liquid crystal composition 2a to the viscosity of the sheath solution (viscosity of the liquid crystal composition / viscosity of the sheath solution) is not particularly limited, but is preferably in the range of 0.02 to 2.00, and further preferably in the range of 0.05 to 0.5. If the viscosity ratio is 0.02 or more, stability of an interface between liquid crystal composition 2a and the sheath solution is excellent, and therefore conjugate fibers 10 excellent in the continuity and the alignability of the liquid crystal can be easily obtained, and therefore such a case is preferred, and if the viscosity ratio is 2.00 or less, spinnability of the sheath solution can be sufficiently satisfied, and simultaneously the viscosity of liquid crystal composition 2a can be suppressed to a low level, and therefore good characteristics as the liquid crystal device can be satisfied. The viscosity of the sheath solution can be adjusted by appropriately changing molecular weight or a concentration of the fiber-formable material, or the kind or the mixing ratio of the solvent.

In conjugate fibers 10 obtained by electrospinning, in order to obtain the fibers excellent in the continuity and the alignability of liquid crystal composition 2a, electric conductivity of the sheath solution is adjusted preferably to the range of 0.1 to 10.0 mS/m, and further preferably to the range of 0.5 to 2.0 mS/m. If the electric conductivity is 0.1 mS/m or more, a speed of being drawn by the electric field is increased, and therefore conjugate fibers 10 excellent in the continuity and the alignability of liquid crystal composition 2a can be easily obtained, and simultaneously the diameter of conjugate fibers 10 can be reduced. If the electric conductivity of the solution is 10.0 mS/m or less, electric field interference during spinning can be reduced, and uniform fibers can be stably obtained. The electric conductivity of the sheath solution can be adjusted by appropriately changing the kind or the mixing ratio of the solvent, or the kind or the concentration of the additive.

With regard to a temperature of the spinning solution, spinning can be performed at room temperature, or can be performed by heating or cooling the solution. Specific examples of a method of discharging the spinning solution include a method of discharging a spinning solution filled in a syringe from a nozzle by using a pump. An inner diameter of the nozzle is not particularly limited, but is preferably in the range of 0.1 to 1.5 millimeters. In addition, when the double tube nozzle is used, an inner diameter of the nozzle on a core side is preferably in the range of 0.1 to 0.5 millimeter, and further preferably in the range of 0.1 to 0.3 millimeter. An inner diameter of the nozzle on a sheath side is preferably in the range of 0.2 to 1.5 millimeters, and further preferably in the range of 0.2 to 0.8 millimeter.

A discharge amount of the spinning solution is not particularly limited, but is preferably 0.1 to 15 mL/h. Moreover, when the sheath solution and liquid crystal composition 2a are separately discharged, a discharge amount of the sheath solution is preferably in the range of 0.5 to 15 mL/h, and further preferably in the range of 1.0 to 8.0 mL/h. A discharge amount of liquid crystal composition 2a is in the range of 0.1 to 3 mL/h, and further preferably in the range of 0.1 to 1.0 mL/h.

Moreover, a ratio of the discharge amount of liquid crystal composition 2a to the discharge amount of the sheath solution (discharge amount of the liquid crystal composition / discharge amount of the sheath solution) is preferably in the range of 0.01 to 1.00, and further preferably in the range of 0.05 to 0.30. If the ratio of the discharge amount of liquid crystal composition 2a to the discharge amount of the sheath solution is 0.01 or more, the continuity of liquid crystal composition 2a can be improved, and if the ratio thereof is 0.05 or more, the continuity can be made sufficient. Moreover, if the ratio thereof is 1.00 or less, liquid crystal composition 2a becomes hard to leak from the fibers, and if the ratio thereof is 0.30 or less, liquid crystal composition 2a becomes hard to sufficiently leak from the fibers, and simultaneously an effect of reducing the inner diameter and the outer diameter of conjugate fibers 10 can also be produced.

A method of acting the electric field thereon is not particularly limited as long as the electric field can be formed between the nozzle and the collector, and for example, a high voltage may be applied to the nozzle and the collector may be grounded. The voltage to be applied is not particularly limited as long as the fibers are formed, but is preferably in the range of 5 to 50 kV. Moreover, a distance between the nozzle and the collector is not particularly limited as long as the fibers can be formed, but is preferably in the range of 5 to 30 centimeters. The collector only needs be able to collect the fibers spun, and a raw material, a shape or the like is not particularly limited. As the raw material of the collector, a conductive material such as metal can be preferably used. The shape of the collector is not particularly limited, and specific examples thereof include a flat plate shape, a conveyer shape, a drum shape, a disc shape and a grid shape.

A method of collecting conjugate fibers 10 in the invention is not particularly limited, but a method of rotating a drum-shaped collector or a disc-shaped collector at a high speed, or a method of using a grid-shaped collector is preferably applied. If such a collection method is applied, the fibers can be arranged in any direction. A rotating speed of the drum-shaped collector or the disc-shaped collector is not particularly limited, but a peripheral speed thereof is preferably in the range of 50 to 2,000 m/min, and further preferably in the range of 100 to 1,000 m/min. If the peripheral speed is 50 m/min or more, conjugate fibers 10 can be arranged along a rotating direction, and if the peripheral speed is 100 m/min or more, conjugate fibers 10 are sufficiently arranged. Moreover, if the peripheral speed is 2,000 m/min or less, an influence of an air flow caused by rotation can be reduced, and if the peripheral speed is 1,000 m/min or less, the influence can be sufficiently reduced, and the fibers can be stably collected. When the grid-shaped collector is used, specific examples of a grid interval include the range of 10 to 200 millimeters. Moreover, specific examples of a shape of the grid include a square, a quadrangle, a rhombus, an equilateral triangle, a right hexagon and a waveform.

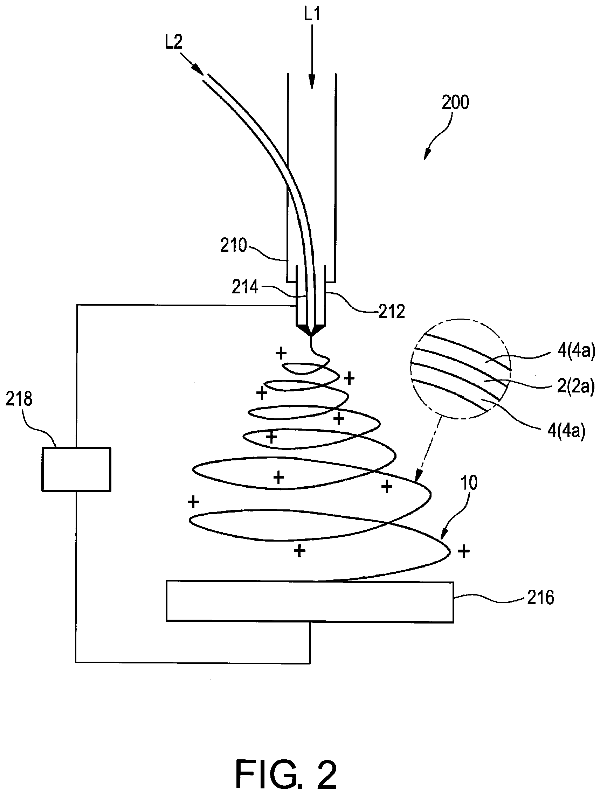

Figure 2 shows a schematic view of conjugate fiber manufacturing apparatus 200 in which a double tube nozzle is used. Conjugate fiber manufacturing apparatus 200 has double tube nozzle 210, in which sheath solution L1 being sheath component-forming material 4a is discharged from outside nozzle 212 of double tube nozzle 210, and liquid crystal composition L2 (2a) is discharged from inside nozzle 214 thereof. Collector 216 for collecting the fibers is provided below double tube nozzle 210. Moreover, according to power supply 218, the electric field is acted between double tube nozzle 210 and collector 216 to process, into fibers, a spinning solution (sheath solution L1 and liquid crystal composition L2) discharged therefrom.

As described above, in the present apparatus, sheath component-forming material 4a (sheath solution L1) and liquid crystal composition L2 (2a) are discharged from different nozzles 212 and 214, respectively. According to the above method, conjugate fibers 10 with the encapsulated liquid crystal are formed, while each of sheath component-forming material 4a and liquid crystal composition 2a is formed into sheath component 4 or core component 2, individually, a state in which sheath component-forming material 4a and liquid crystal composition 2a are substantially separated is ensured.

### Conjugate fiber aggregate

A conjugate fiber aggregate in the invention is not particularly limited, but the conjugate fibers 10 with the encapsulated liquid crystal are preferably uniaxially arranged. When conjugate fibers 10 are uniaxially arranged, various characteristics of the conjugate fibers can be anisotropically developed, and conjugate fibers 10 can be preferably used in the form of the liquid crystal display device having high contrast, for example. A degree of arrangement of conjugate fibers 10 can be evaluated by a standard deviation of a fiber arrangement angle, and if the standard deviation of the fiber arrangement angle is small, the degree of arrangement of the fibers may be reasonably maintained to be high. The standard deviation of the fiber arrangement angle is preferably 20° or less, and further preferably 15° or less.

Moreover, conjugate fibers 10 may be randomly arranged. When the conjugate fibers are randomly arranged, various characteristics can be isotropically developed.

A thickness of the conjugate fiber aggregate is not particularly limited, but is preferably in the range of 1 to 20 micrometers, and further preferably in the range of 2 to 10 micrometers. If the thickness thereof is 1 micrometer or more, a function as the liquid crystal device can be sufficiently satisfied, and if the thickness thereof is 20 micrometers or less, the light transmission quantity can be sufficiently increased.

An area proportion of conjugate fibers 10 in the conjugate fiber aggregate is preferably 80% or more, and further preferably 95% or more.

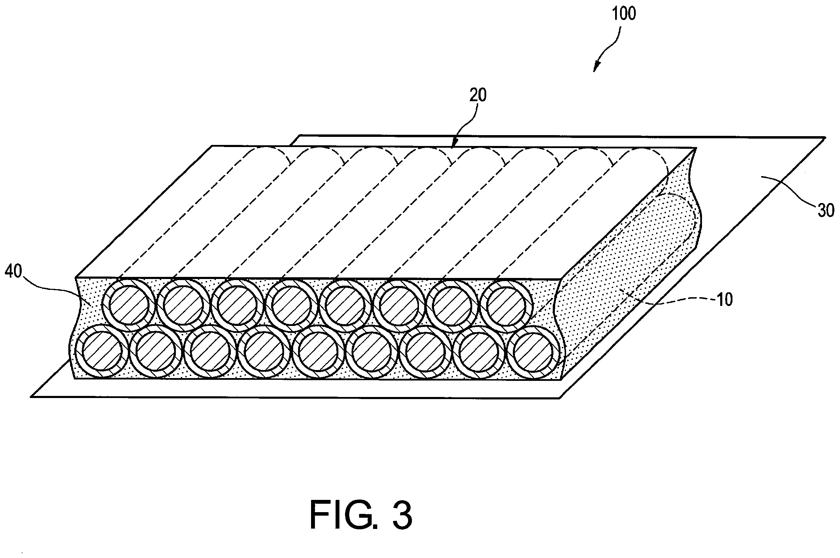

Moreover, as shown in Figure 3, conjugate fiber aggregate 20 can be formed by arranging a plurality of conjugate fibers 10 on substrate 30. In the above case, binder 40 is preferably filled therein. Conjugate fibers 10 can be used in the form of liquid crystal display device 100 by thus forming conjugate fiber aggregate 20. More specifically, a liquid crystal layer can be formed on the substrate without forming an alignment film, which is different from a conventional art, and a manufacturing cost for the liquid crystal display device can be significantly suppressed. In addition, substrate 30 can be formed also by using a glass substrate. However, liquid crystal display device 100 can be configured in the form of a bendable flexible liquid crystal display device by forming substrate 30 using a bendable resin substrate or the like.

In the conjugate fibers in the invention, the liquid crystal is continuously distributed within the fibers, and therefore the conjugate fibers can be preferably used in the form of a liquid crystal device for a display or a liquid crystal device for wavelength selective reflection.

### Examples

Hereinafter, the invention will be described in detail by way of Examples, but not limited by the Examples. In addition, a method of determining a value of physical properties and a definition of the value described in Examples is indicated below.

### (1) Continuity of a liquid crystal composition containing a halogen-containing liquid crystal compound within conjugate fibers

Continuity of the liquid crystal composition containing the halogen-containing liquid crystal compound was confirmed by observing the conjugate fibers in a crossed nicol state by using a polarizing microscope made by Nikon Corporation.

### (2) Alignment state of the liquid crystal composition containing the halogen-containing liquid crystal compound within the conjugate fibers

A change in a light transmission quantity of the conjugate fibers was observed by rotating the conjugate fibers in the crossed nicol state using the polarizing microscope made by Nikon Corporation.

### (3) Standard deviation of a mean outer diameter and an outer diameter of the conjugate fibers

A mean value and a standard deviation were calculated by measuring outer diameters of 50 fibers from an image obtained by observing the conjugate fibers at a magnification of 500 to 5,000 by using a scanning electron microscope.

### (Liquid crystal composition A used in Examples 1 and 2)

A formulation of liquid crystal composition A is as shown below.

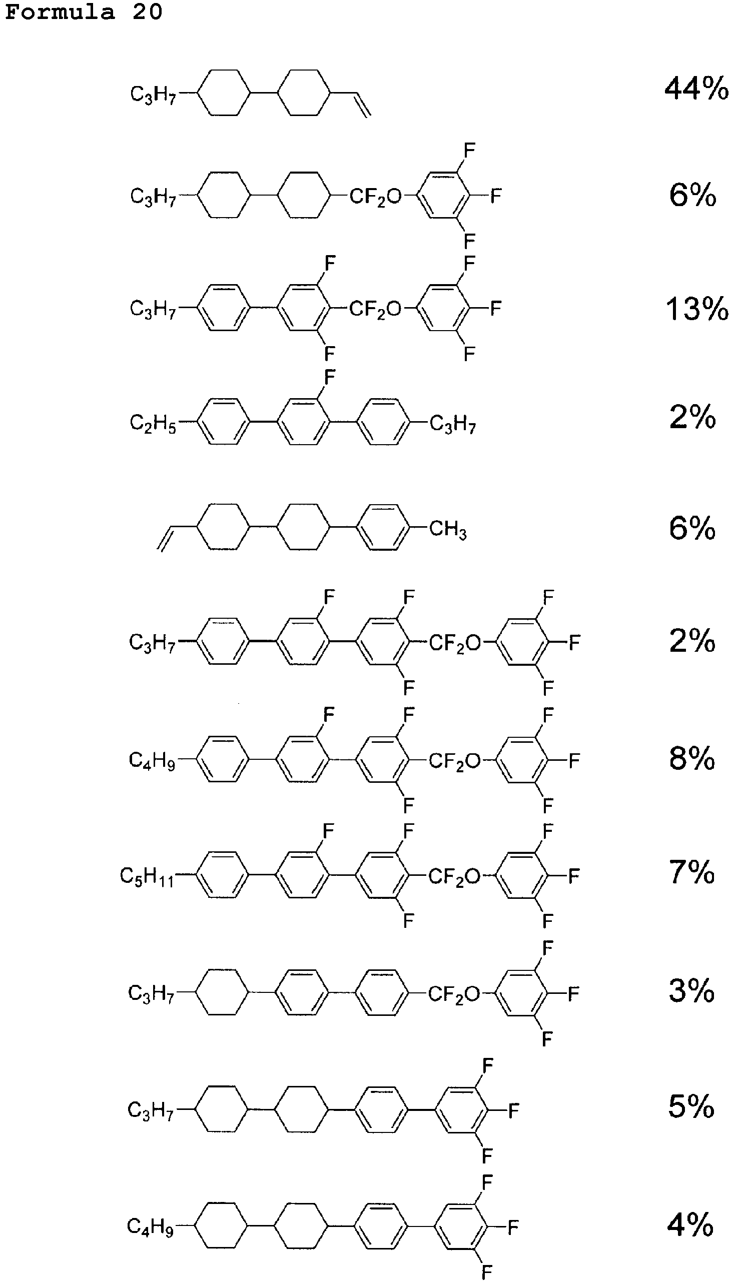

### (Example 1)

A sheath solution composed of 10 parts by weight of polyvinylpyrrolidone (Mw: 1,300,000; made by Sigma-Aldrich Co. LLC), 36 parts by weight of ethanol (extra pure; made by Nacalai Tesque, Inc.) and 54 parts by weight of chloroform (extra pure; made by Nacalai Tesque, Inc.) and having a viscosity of 360 mPa·s was prepared.

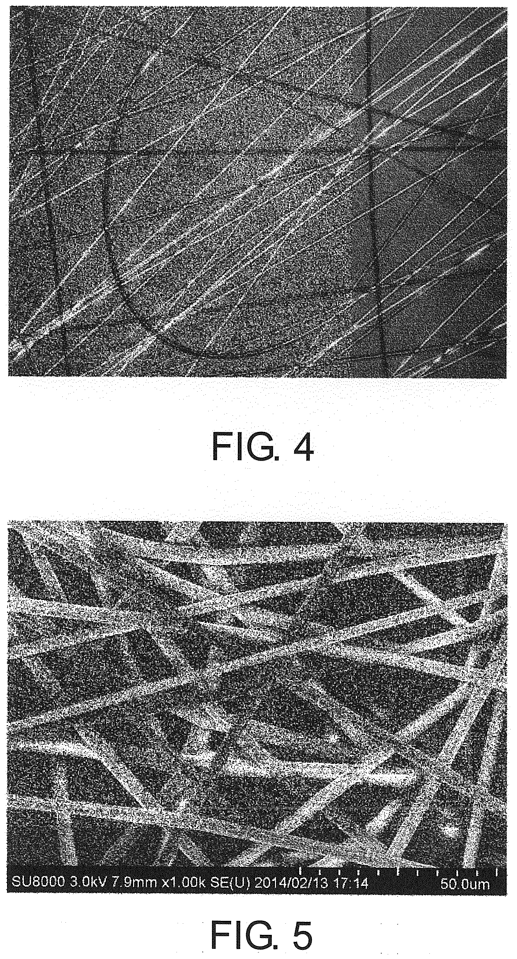

Subsequently, liquid crystal composition A having a viscosity of 20 mPa·s was extruded by a syringe pump at 0.2 mL/h to a nozzle having an inner diameter of 0.22 millimeter and the sheath solution was extruded by a syringe pump at 6.0 mL/h to a nozzle having an inner diameter of 0.8 millimeter, and simultaneously a voltage of 20 kV was applied to the nozzles. Then, conjugate fibers were randomly collected in a grounded collector. A distance between a needle and the collector was adjusted to 23 centimeters. A polarizing microscope photograph of the conjugate fibers obtained is shown in Figure 4.

As is obvious from Figure 4, the liquid crystal composition within the conjugate fibers was continuously distributed. Moreover, when the conjugate fibers were rotated and observed, a change in a light transmission quantity was confirmed, and therefore the liquid crystal within the conjugate fibers was suggested to be aligned in a direction perpendicular to or parallel to a fiber axis.

Moreover, a polarizing microscope photograph of the conjugate fibers is shown in Figure 5. From Figure 5, a mean outer diameter of the conjugate fibers obtained was 3.64 micrometers, a standard deviation of the outer diameter was 0.42 micrometer, and a CV value of the outer diameter was 12%.

### (Example 2)

A sheath solution composed of 10 parts by weight of polyvinylpyrrolidone (Mw: 1,300,000; made by Sigma-Aldrich Co. LLC), 36 parts by weight of ethanol (extra pure; made by Nacalai Tesque, Inc.) and 54 parts by weight of chloroform (extra pure; made by Nacalai Tesque, Inc.) and having a viscosity of 360 mPa·s was prepared.

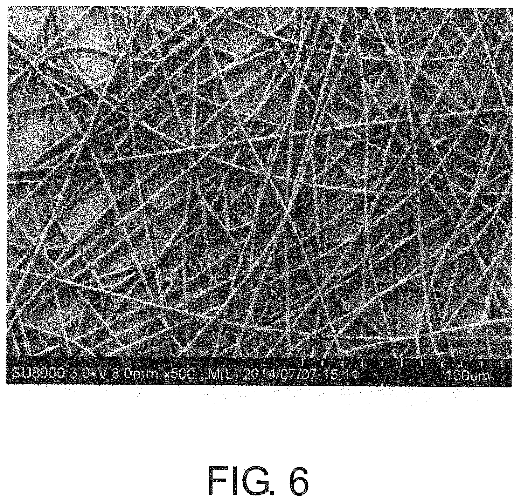

Subsequently, liquid crystal composition A having a viscosity of 20 mPa·s was extruded by a syringe pump at 0.4 mL/h to a nozzle having an inner diameter of 0.22 millimeter, and the sheath solution was extruded by a syringe pump at 2.0 mL/h to a nozzle having an inner diameter of 0.8 millimeter, and simultaneously a voltage of 15 kV was applied to the nozzles. Then, conjugate fibers were randomly collected in a grounded collector. A distance between a needle and the collector was adjusted to 20 centimeters. The liquid crystal composition within the conjugate fibers was continuously distributed, and a large difference in a light transmission quantity was confirmed by rotating the conjugate fibers. Moreover, a scanning electron microscope photograph of the conjugate fibers is shown in Figure 6.

From Figure 6, a mean outer diameter of the conjugate fibers obtained was 1.60 micrometers, a standard deviation of the outer diameter was 0.25 micrometer, and a CV value of the outer diameter was 16%.

### (Comparative Example 1)

A spinning solution composed of 7.3 parts by weight of polylactic acid (made by Cargill Dow LLC), 10.1 parts by weight of 4-pentyl-4'-cyanobiphenyl (5CB; made by Merck Co.), 69.5 parts by weight of chloroform (made by Sigma-Aldrich Co. LLC) and 23.2 parts by weight of acetone (made by Sigma-Aldrich Co. LLC) was prepared. Subsequently, the spinning solution was extruded by a syringe pump at 0.6 mL/h to a nozzle having an inner diameter of 0.41 millimeter, and simultaneously a voltage of 20 kV was applied between the nozzle and a glass substrate coated with ITO. Then, conjugate fibers were collected on the substrate. A driving voltage of a liquid crystal in the conjugate fibers obtained was as high as about 80 V, which was inferred to be caused by disturbed alignment of the liquid crystal because the conjugate fibers include a state in which a polymer component was mixed with a liquid crystal material.

### (Comparative Example 2)

A sheath solution composed of 12.5 parts by weight of polyvinylpyrrolidone (Mw: 1,300,000; made by Acros Corporation), 87.5 parts by weight of ethanol (extra pure; made by Nacalai Tesque, Inc.) and 0.5 part by weight of sodium chloride (extra pure; made by Nacalai Tesque, Inc.) was prepared. Subsequently, a liquid crystal composition containing 50 parts by weight of a nematic mixture (RO-TN-403/015S; made by F. Hoffmann-La Roche, Ltd.) and 50 parts by weight of a chiral agent ((S)-4-cyano-4-(2-methylbutyl)-biphenyl; SYNTHON Chemicals GmbH & Co. KG) was prepared. Then, the liquid crystal composition was extruded by a syringe pump at 0.7 mL/h to a nozzle having an inner diameter of 0.25 millimeter, and the sheath solution was extruded by a syringe pump at 1.8 mL/h to a nozzle having an inner diameter of 1.0 millimeter, and simultaneously a voltage of 10 kV was applied to the nozzles. Then, conjugate fibers were randomly collected in a grounded collector. A distance between a needle and the collector was adjusted to 10 centimeters.

Although the liquid crystal composition within the conjugate fibers was continuously distributed, a change in the light transmission quantity was small in observation by the polarizing microscope. Moreover, the mean outer diameter of the conjugate fibers obtained was 5.2 micrometers, and alignment of the liquid crystals was suggested to be disturbed.

While the invention has been described in detail and with reference to specific embodiments thereof, various modifications and alterations will be apparent to those skilled in the art without departing from the spirit and the scope of the invention. This application is based on Japanese patent application filed on December 8, 2014 (Japanese Patent Application No.2014-248413), the contents of which are incorporated herein by reference.

### Industrial Applicability

According to the invention, a step of forming an alignment film can be simplified in a current process of manufacturing a liquid crystal display device to suppress a manufacturing cost. According to the invention, flexibility of the liquid crystal display device can be achieved.

### Reference Signs List

2 Core component
2a Liquid crystal composition
2b Halogen-containing liquid crystal compound
4 Sheath component
4a Sheath component-forming material
10 Conjugate fibers with an encapsulated liquid crystal (conjugate fibers)
20 Conjugate fiber aggregate
30 Substrate
40 Binder
100 Liquid crystal display device
200 Conjugate fiber manufacturing apparatus
210 Double tube nozzle
212 Outside nozzle
214 Inside nozzle
216 Collector
218 Power supply
d Outer diameter
L Inner diameter (outer diameter of core component)
L1 Sheath solution
L2 Liquid crystal composition

## Claims

1. Conjugate fibers with an encapsulated liquid crystal, comprising sheath-core conjugate fibers having a liquid crystal composition as a core component, wherein the liquid crystal composition contains a halogen-containing liquid crystal compound.

2. The conjugate fibers with the encapsulated liquid crystal according to claim 1, wherein a mean outer diameter of the conjugate fibers is 5 micrometers or less.

3. The conjugate fibers with the encapsulated liquid crystal according to claim 1 or 2, wherein, in the core component, the liquid crystal composition containing the halogen-containing liquid crystal compound is continuously distributed.

4. The conjugate fibers with the encapsulated liquid crystal according to any one of claims 1 to 3, wherein the liquid crystal composition containing the halogen-containing liquid crystal compound is aligned in a direction parallel to or perpendicular to a fiber axis.

5. The conjugate fibers with the encapsulated liquid crystal according to any one of claims 1 to 4, wherein a coefficient of variation (CV value) of an outer diameter of the conjugate fibers is 20% or less.

6. A conjugate fiber aggregate, formed by uniaxially arranging the conjugate fibers with the encapsulated liquid crystal according to any one of claims 1 to 5.
